(19) **Europäisches Patentamt / European Patent Office / Office européen des brevets**

(11) **EP 4 337 468 B1**

(12) **EUROPEAN PATENT SPECIFICATION**

(45) Date of publication and mention of the grant of the patent:
**16.04.2025 Bulletin 2025/16**

(21) Application number: **21727382.0**

(22) Date of filing: **12.05.2021**

(51) International Patent Classification (IPC):
**B41J 2/175** (2006.01)

(52) Cooperative Patent Classification (CPC):
**B41J 2/175**

(86) International application number:
**PCT/EP2021/062725**

(87) International publication number:
**WO 2022/237983 (17.11.2022 Gazette 2022/46)**

(54) **CONTINUOUS INKJET PRINTER, FLUID COMPONENTS FOR A CONTINUOUS INKJET PRINTER AND PROCESS FOR MANUFACTURING SAID COMPONENTS**

KONTINUIERLICHER TINTENSTRAHLDRUCKER, FLÜSSIGKEITSKOMPONENTEN FÜR EINEN KONTINUIERLICHEN TINTENSTRAHLDRUCKER UND VERFAHREN ZUR HERSTELLUNG DER KOMPONENTEN

IMPRIMANTE À JET D'ENCRE CONTINU, COMPOSANTS FLUIDES POUR UNE IMPRIMANTE À JET D'ENCRE CONTINU ET PROCÉDÉ DE FABRICATION DESDITS COMPOSANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2024 Bulletin 2024/12**

(73) Proprietor: **Dover Europe Sàrl**
**1214 Vernier (CH)**

(72) Inventors:
• **XING, Jean**
  **26500 Bourg Lès Valence (FR)**
• **BONNETON, Damien**
  **26730 Hostun (FR)**
• **JACQUIER, Thierry**
  **26600 Pont de l'Isère (FR)**

(74) Representative: **Regimbeau**
**20, rue de Chazelles**
**75847 Paris Cedex 17 (FR)**

(56) References cited:
EP-A1- 3 210 786  EP-A1- 3 587 124
WO-A1-2012/038520  WO-A1-2015/187839
US-A1- 2010 220 128  US-A1- 2014 210 901
US-A1- 2015 258 805  US-B2- 10 189 268

## Description

## TECHNICAL FIELD AND PRIOR ART

The invention concerns the field of continuous inkjet printers (CIJ).

It also concerns components of an ink circuit of CIJ printers, for the purpose of increased flexibility. It also concerns a process for manufacturing such components.

Continuous inkjet printers (CIJ) are well known in the field of industrial coding and labelling of various products, for example to mark barcodes or expiry dates on food items or on packages for items directly on the production line and at fast production rate. This type of printer is also found in some fields of design in which use is made of the graphic printing possibilities of the technology.

The ink circuit of a CIJ printers comprise many components, such as fluid manifolds or connectors or dampers or stimulation bodies or even printing heads, which usually comprise several parts assembled together with sealing means, such as O rings or similar to ensure fluid tightness. The assembling of such parts is time consuming and there is a risk of leaks at the various interfaces.

For example such a component can comprise several parts in different materials, for example a first part in stainless steel and a second part in plastic fixed together by screws, O rings ensuring tightness at the interface between both parts. The first part can itself comprise various ducts and conduits which are formed by machining several blocks of stainless steel which are then assembled together. WO-A-2015/187839 discloses the preamble of claims 1 and 13.

There is a need for fluid components of an ink circuit of such CIJ printers made of one piece whilst guaranteeing great flexibility and reliability, ease of maintenance to allow rapid servicing. Mounting such components should also be easier and faster than known components.

There is also a need for components for such an ink circuit which can be easily removed or disassembled from said ink circuit for example when they must be repaired or replaced by other components.

There is also a need for components which can be assembled with several parts of such an ink circuit o allow fluids to flow in different directions.

## SUMMARY OF THE INVENTION

The invention first concerns a continuous inkjet (CIJ) printer, comprising:

- an ink supply system comprising an ink circuit,
- a portion for receiving an ink cartridge and a portion for receiving a solvent or organic solvent cartridge;
- at least one fluid component, comprising:

  * at least one duct, having an inner surface, and extending between a first end and a second end,
  * at least one fluid inlet and at least one fluid outlet, and
  * at least one fluid connection area comprising at least one of said at least one fluid inlet and at least one fluid outlet,

  said fluid component being a one-piece fluid component made of a material chemically resistant to at least one organic solvent, wherein at least part of said fluid connection area has a roughness (Ra) of less than 10 $\mu$m or less than 5 $\mu$m and at least part of the inner surface of said duct has a roughness (Ra) of less than 10 $\mu$m.

Preferably, said material is chemically resistant to ethanol, and/or methyl isopropyl ketone (MIPK) and/or methyl ethyl ketone (MEK).

Said fluid component can further comprise a chamber for a sensor and/or a chamber for a damper. At least part of the walls delimiting said chamber can have the limited roughness (Ra) mentioned above for the duct(s).

Said chemically resistant material can for example comprise stainless steel, or a ceramic material, or a plastic material or a glass material.

In a continuous inkjet (CIJ) printer according to the invention, said fluid component:

- can be a fluid manifold or a part of a printing head or a hydraulic distributor or a fluid damper or a fluid connector;
- and/or can comprise at least two fluid connection areas extending in different planes.

At least one duct can comprise a directional transition having an edge with a radius of curvature tangential to a flow direction of the fluid in said duct or can have a curved shape with a finite, non-zero radius of curvature in at least one plane comprising at least a tangent to a flow direction of the fluid in said at least one duct. Said radius of curvature can for example be larger than 0,5 mm.

Said at least one fluid connection area can comprise at least one O-ring groove or counterbore around said at least one fluid inlet and/or said at least one fluid outlet.

In an example, said fluid component comprises at least two ducts, which can, for example:

- extend along non parallel directions and/or intersect with each other;
- and/or extend in a same plane or in different planes;
- and/or be coupled together with a mechanical link.

Said fluid component can comprise a succession of layers in said chemically resistant material, each layer having a thickness of between 5 $\mu$m and 300 $\mu$m.

At least part of a duct can have a wall with a thickness between 1 mm and 10 mm. Alternatively the duct(s) is/are embedded in a piece or a block of said chemically resistant material.

A continuous inkjet (CIJ) printer according to the invention can comprise an assembly of said fluid component, also designated as first fluid component, with a second fluid component connected with said fluid connection area of the first fluid component, wherein said second fluid component comprises a valve, or a pump, or a filter, or a damper, or a fluid connector or a hydraulic distributor, which comprises at least one fluid inlet and at least one fluid outlet which matches with or corresponds to said at least one of said at least one fluid inlet and said at least one fluid outlet of the first fluid component, so that at least one fluid can circulate from said first fluid component to said second fluid component and/or vice versa. Both first fluid component and second fluid component can be maintained in friction contact with each other: they can be rotated and/or translated relative to each other but remain in contact during the movement. No fluid can flow out of the device between both contact surfaces: the contact at the interface between both surfaces is watertight. Preferably, the surfaces or areas in friction contact have a roughness less than 1 $\mu$m, for example between 0,4 and 0,8 $\mu$m, thus not requiring any gasket so that the interface is watertight.

A continuous inkjet (CIJ) printer according to the invention can further comprise a print head connected to the ink circuit via a flexible umbilical cable, said cable containing hydraulic connection means to bring ink from the ink circuit to the print head and send ink to be recovered from the print head towards said ink circuit, and electrical connection means.

The invention also concerns a fluid component (or part, or one piece or monobloc fluid component or part) for a continuous inkjet printer, comprising:

at least one duct, having an inner surface, said at least one duct extending between a first end and a second end,
at least one fluid inlet and at least one fluid outlet, and
at least one fluid connection area comprising at least one of said at least one fluid inlet and at least one fluid outlet,

Said fluid component can be a one-piece fluid component made of a material chemically resistant to at least one organic solvent, for example ethanol, and/or methyl isopropyl ketone (MIPK) and/or methyl ethyl ketone (MEK).

At least part of said fluid connection area has a roughness (Ra) of less than 10 $\mu$m or 5 $\mu$m and at least part of the inner surface of said two ducts has a roughness (Ra) of less than 10 $\mu$m.

Said fluid connection area or surface is for a connection to another fluid component or part of a CIJ printer: through said at least one fluid inlet(s) and/or fluid outlet(s), a fluid can flow into, resp. from, said fluid component or part, from, resp. into, said other fluid component or part.

Preferably:

A fluid component according to the invention may comprise several ducts, for example at least 2 ducts, which may extend along parallel or non-parallel directions and/or intersecting with each other. Said at least 2 ducts may extend in a same plane or in different planes.

At least one duct can comprise a directional transition having an edge with a radius of curvature tangential to a flow direction of the fluid in said duct and/or can have a curved shape with a finite, non-zero radius of curvature in at least one plane comprising at least a tangent to a flow direction of the fluid in said at least one duct. Said radius of curvature can for example be larger than 0, 5 mm.

If a fluid component or part according to the invention comprises at least 2 ducts, at least one mechanical link, for example a wall or one or more connecting beams, can link said at least 2 ducts together so that they remain mechanically fixed with respect to each other. Said at least one mechanical link can also be manufactured during a same additive manufacturing process as the rest of the component.

A fluid component according to the invention may comprise at least one chamber for a sensor and/or a damping chamber. At least part of the walls delimiting said chamber can have the limited roughness (Ra) mentioned above for the duct(s).A fluid component according to the invention can be for example in stainless steel or in a ceramic material or in a plastic material or in a glass material.

A fluid component according to the invention may be or comprise a fluid manifold and/or at least part of a printing head or a hydraulic distributor or a fluid damper or a fluid connector.

Said at least one fluid connection area can comprise at least one O-ring groove or counterbore around said at least one fluid inlet and/or said at least one fluid outlet.

A fluid component according to the invention can comprise a succession of layers in said same material, for example said material chemically resistant to at least at least one organic solvent, for example ethanol and/or methyl ethyl ketone (MEK) and/or methyl isopropyl ketone (MIPK), each layer having for example a thickness of between 5 $\mu$m and 300 $\mu$m. This is in particular the case for a component made by a 3D printing process, where layers are successively deposited on each other or where layer of a same material are progressively processed, for example by a laser beam or by a jet of binder.

The duct(s) of a fluid component of a CIJ printer according to the invention or of a fluid component according to the invention can be embedded in a block or piece of material. Alternatively, at least part of one or more of said ducts can have a wall having a thickness comprised between 1 mm and 10 mm with no material beyond said wall: this saves material between the ducts and allows the component to be much lighter.

A fluidic component according to the invention can be assembled with or to at least another fluid component, for example at least a valve or a pump or a filter or a damper or a fluid connector or a hydraulic distributor, fixed against said fluid connection area, said other fluid component comprising at least one fluid inlet and at least one fluid outlet which matches or corresponds to said at least one of said fluid inlet and said fluid outlet of said fluid component. Thus, when both components are assembled at least one fluid can circulate from said fluid component to said other fluid component or vice versa. Both said fluid component according to the invention and said other fluid component can be maintained in friction contact with each other: they can be rotated and/or translated relative to each other but remain in contact during the movement. No fluid can flow out of the device between both contact surfaces: the contact at the interface between both surfaces is watertight. Preferably, the surfaces or areas in friction contact have a roughness less than 1 µm, for example between 0,4 µm and 0,8 µm, thus not requiring any gasket so that the interface is watertight.

The invention also concerns a continuous inkjet (CIJ) printer, comprising:

- an ink supply system comprising an ink circuit,
- at least one fluid component according to the invention, as disclosed above or more generally in this description.

The invention also concerns a process for manufacturing at least one fluid component or one-piece (or single bloc or monobloc) fluid component, for example as disclosed above and/or in the following description or at least one part of a CIJ printer, said fluid component or one-piece (or single bloc or monobloc) fluid component or part being according to the invention, as disclosed above and/or more generally in this description, said process comprising at least a step of additive manufacturing (or 3D printing).

The invention also concerns a process for manufacturing at least one fluid component or one-piece (or single bloc or monobloc) fluidic component or at least one part of a CIJ printer, said fluid component or one-piece (or single bloc or monobloc) fluid component or part comprising at least one duct, at least one fluid inlet and at least one fluid outlet, said process comprising a step of additive manufacturing (or additive printing or 3D printing) of:

- said at least one duct,
- or of a one-piece or one bloc comprising said at least one or more duct, said duct(s) being embedded in said bloc.

Said at least one fluid component or single bloc fluid component or part can in particular comprise at least one fluid connection area (or surface) comprising at least one of said fluid inlet(s) and said fluid outlet(s). Said above mentioned step of additive manufacturing can comprise manufacturing said at least one duct and said at least one fluid connection area; or said one piece or one bloc comprises said at least one or more duct and said at least one fluid connection area.

Said at least one fluid component or single bloc fluid component or part is preferably in a material chemically resistant to at least one organic solvent, for example ethanol and/or methyl ethyl ketone (MEK) and/or methyl isopropyl ketone (MIPK).

Preferably:

- at least part of said at least one fluid connection area has a roughness (Ra) of less than 10 µm or 5 µm;
- and/or the inner surface of at least part of one or more of said duct(s) has a roughness Ra (or arithmetical mean roughness) of less than a predetermined value, for example less than 10 µm or less than 5 µm, adapted for example to pigmented inks, so that ink pigments do not remain attached to said inner surface.

In a particular embodiment, said fluid component can comprises at least 2 ducts, each having at least one fluid inlet and at least one fluid outlet; said method may therefore comprise a step of additive manufacturing of said at least 2 ducts, possibly of at least one mechanical link between said ducts and possibly of said at least one fluid connection area (or surface) comprising at least one of said fluid inlet(s) and fluid outlet(s).-

A process according to the invention may comprise a step of further processing the inner surface of at least part of said one or more duct(s) and/or of said at least one fluid connection area or surface if any of them does not have the required roughness. For example, said further processing may include a mechanical and/or a chemical processing of at least some portions of the component or part. Examples of said mechanical and/or a chemical processing are given in the detailed description.

The 3D printing process can be selected or adapted based on the required roughness for said duct(s) and/or fluid connection area; for example, said process may include selecting or adapting an angle of deposition of the material on a substrate so that some areas or portions have a better roughness than others.

Or the order in which the various portions of the component are to be printed in a build tank can be selected or adapted so that a better roughness is obtained on the area(s) for which this parameter is more critical. In particular, the final component can be oriented in a build tank so that a specific surface of said component has the required roughness Ra.

A one piece or monobloc fluid component or part obtained by a process according to the invention has no mechanical assembly zones and no screws or any other fastening means between different portions or parts. There is thus a mechanical continuity between any two parts, in particular any two neighbouring parts, of a one piece or monobloc fluid component or part according to the invention. A one piece or monobloc fluid component or part obtained by a process according to the invention is made of layers, stacked upon one another and contacting each other, each having a thickness of between 5 $\mu$m and 300 $\mu$m or 500 $\mu$m. Thicker layers may generate a higher surface roughness.

A process according to the invention may comprise an additive manufacturing of a block or piece of material, including the duct(s) and possibly the fluid connection area(s), so that the manufactured fluid component comprises one or more duct(s) in which is embedded in a block or piece of material. Alternatively, the wall(s) of the duct(s) are manufactured, at least part of said wall(s) having a thickness comprised between 1 mm and 10 mm with no material beyond said wall: this saves material between the ducts and allows the component to be much lighter.

In a CIJ printer, or a fluid component or a process according to the invention, a duct preferably has circular cross-section (perpendicularly to a flow of fluid inside said duct), having a diameter between 1 mm and 5 mm, for example between 2 mm and 5 mm or between 0,5 mm and 3 mm.

In a CIJ printer, or a fluid component or a process according to the invention, said at least one fluid connection area or surface can be a side or a surface or an interface against which another fluid component can be positioned and/or bear and be possibly fixed by securing means, so that:

- a fluid, for example ink and/or solvent, can circulate from at least one fluid outlet of said one piece or monobloc fluid component or part into at least one fluid inlet of said other fluid component;
- and/or a fluid, for example ink and/or solvent, can circulate into at least one fluid inlet of said one piece or monobloc fluid component or part from at least one fluid outlet of said other fluid component.

In a CIJ printer, or a fluid component or a process according to the invention, one or more of said fluid connection area(s) or surface(s) can have a roughness Ra (or arithmetical mean roughness) of less than 10 $\mu$m or less than 5 $\mu$m or less than 3 $\mu$m or less than 1,6 $\mu$m.

In a CIJ printer, or a fluid component or a process according to the invention, at least part of the inner or inside wall(s) of at least one duct(s), which is in contact with ink, is preferably as smooth as possible, the roughness Ra (or arithmetical mean roughness) of said inner or inside wall(s) being preferably less than 10 $\mu$m, or less than 5 $\mu$m, more preferably between 3 and 1,5 $\mu$m. Thus, pigments of ink cannot remain attached to the inner surface of the conduct, where they could form residual solid growth on the ink flow.

If said fluidic component or part comprises at least 2 ducts, they may extend at least partly along non parallel directions, in a same or in different planes.

A fluidic component according to the invention or a fluidic component in a CIJ printer according to the invention can be assembled with or to at least another fluid component, for example with one or more screw(s), or nut(s), or bolt(s), or clip(s), or clamp(s) or hook(s) or any other securing means.

The invention also concerns a process for printing, implementing a CIJ printer according to the invention. In particular such printing process may implement a pigmented ink.

## BRIEF DESCRIPTION OF THE FIGURES

- Figure 1 is a view of a fluid manifold according to an embodiment of the invention;
- Figures 2A -2B are other views of the fluid manifold of figure 1, according to an embodiment of the invention.
- Figures 2C and 2D are cross sections of a fluid manifold according to the invention (figure 2C) and the same fluid manifold made by prior art methods (figure 2D);
- Figure 3 is a schematic view of the fluidic connections in a device according to figures 1-2C;
- Figures 4A and 4B are different views of another fluid manifold according to an embodiment of the invention.
- Figure 4C is a schematic view of the fluidic connections in a device according to figures 4A-4B;
- Figures 5A-15C are different examples of a fluid distributor according to an embodiment of the invention;
- Figures 16A-16D are different examples of a body for a fluid distributor according to an embodiment of the invention;
- Figure 17 is a schematic view of the fluidic connections in a device according to figures 16A-16D;
- Figures 18 - 19B are different views of a printing head comprising a fluid manifold according to an embodiment of the invention.
- Figure 20A shows a fluid connector according to an embodiment of the invention and figures 20B-20D show a pump module comprising said fluid connector;
- Figures 21A - 21B are different views of a stimulation body according to an embodiment of the invention.
- Figures 22A - 26B are different views of dampers according to different embodiments of the invention;
- Figure 27 shows a combination of 2 dampers;
- Figures 28A - 28E show aspects of various 3D printing processes;
- Figure 29 shows a CIJ printer in which one or more components according to the invention can be implemented.

## DETAILED DESCRIPTION OF EMBODIMENTS

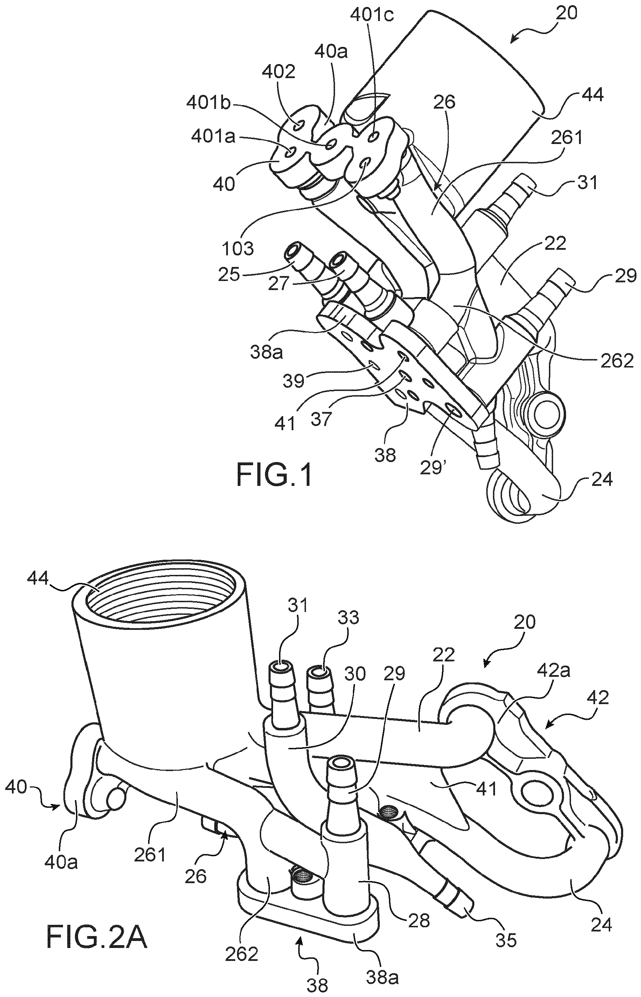

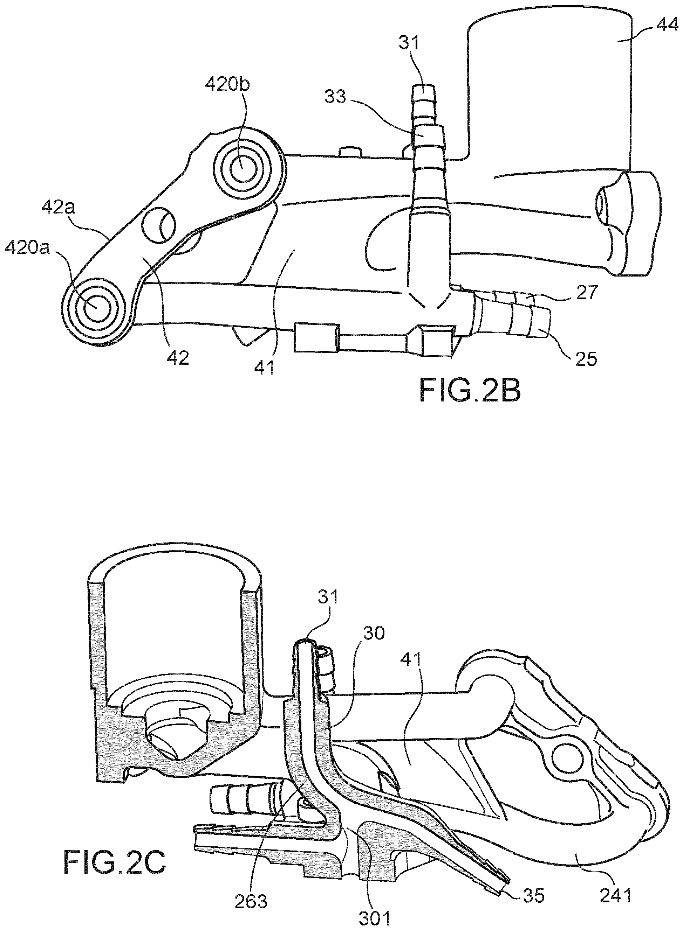

A first example of a fluid component or part according to the invention is a fluid manifold 20 and is illustrated on figures 1-2A, 2B and 2C.

It comprises several conduits or ducts 22, 24, 26, 28, 30; one or more of them can be for circulating either ink and/or solvent; as can be understood from these figures, several ducts may not extend in a same direction and/or in a same plane; in particular, as can be seen on figures 1-2C, some ducts 26, 28 are not parallel with each other and/or may even intersect with each other; some of them may comprise a first portion 261 and a second portion 262 which are not aligned with each other along a straight direction.

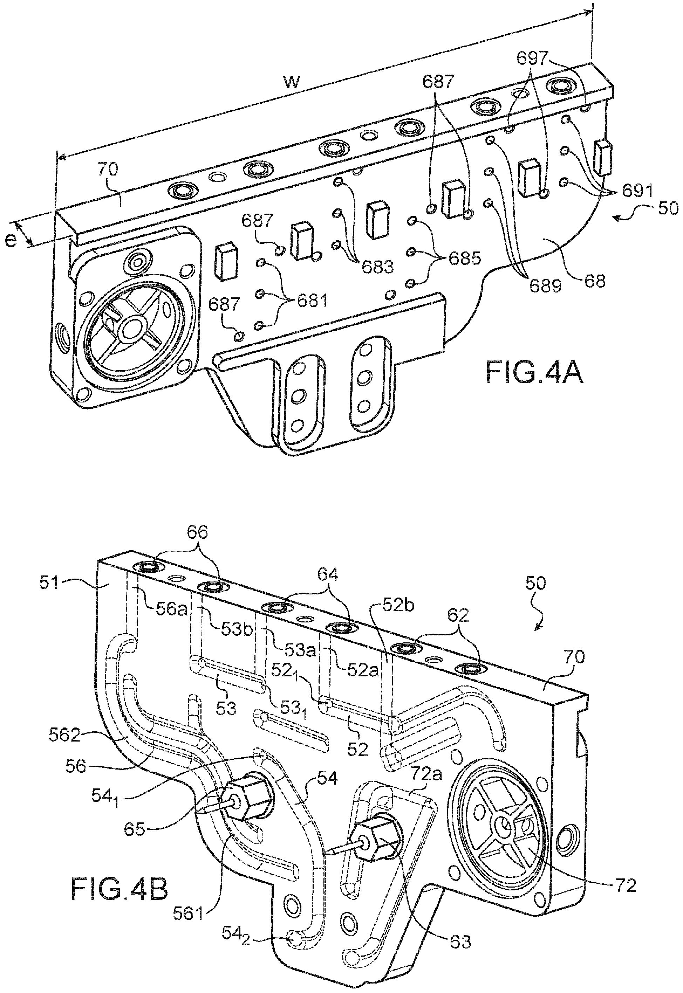

Each duct has at least one end forming one or more fluid inlet and/or at least one end forming one or more fluid outlet 29, 31, 33, 35; one or more of said fluid inlet(s) and/or fluid outlet(s) can be adapted to connect one or more of said ducts, for example one or more of said fluid inlet(s) and/or fluid outlet(s) can have the shape of a fir-tree connection which can be introduced into another duct, for example a flexible duct. The fluid manifold 20 comprises one or more end parts or pieces 38a, 40a, 42a which comprise one or more fluid connection area(s) or surface(s) 38, 40 (see figure 1), 42 (see figure 2A) to connect the manifold to one or more other part(s) of an ink supply circuit and/or to one or more fluid components, for example at least one valve or at least one pump or at least one filter or at least one damper or at least one connection means like a cannula (for example cannula 63 or 65 of figure 4B). Each of said other fluid component comprises at least one fluid inlet and at least one fluid outlet, the component being positioned against one of the fluid connection areas of component 20 so that a fluid can flow from said other fluid component to said fluid manifold 20 or vice versa. Said end parts also contribute to the rigidity of the whole manifold.

Some ducts may be mechanically connected together by connecting means 41 (see figure 2A, - 2C), comprising for example one or more connecting link(s) or beam(s) or wall(s) which extend(s) from one of said duct(s) to another one of said duct(s). This contributes to the rigidity of the whole manifold and avoids deformations of the fluid component 20 during use.

One or more duct may be straight; one or more duct may have a curvature radius of at least 0.5 mm in a plane containing the fluid flow direction or the fluid path or containing a tangent to said fluid flow direction or to said path, which offers several advantages as explained below.

One or more duct may have an inner diameter of between 1 mm and 5 mm, for example between 2 mm and 5 mm or between 0, 5 mm and 3 mm. In the embodiment illustrated on figures 1-2C, 3E, the thickness of the wall of each duct is between 1 mm and 10 mm, for example between 3 mm and 5 mm, depending on the material of the component (for example plastic or metal) and on the required mechanical rigidity of the component.

One or more duct(s) can be for circulating ink, which comprises solvent but also pigments and binders. The inner or inside wall(s) of said duct(s), which is/are in contact with ink, is/are preferably as smooth as possible, the roughness of said inner or inside wall(s) being preferably less than 10 $\mu$m, or less than 5 $\mu$m, more preferably between 3 and 1,5 $\mu$m. Thus, pigments of ink cannot remain attached to the inner surface of the conduct, where they could form residual solid growth on the ink flow.

Preferably, said one or more fluid connection area(s) or surface(s) 38, 40 (see figure 1), 42 (see figure 2B) is smooth enough so that sealing means, for example a gasket, can be applied and pressed against it to form a leak tight assembly with said other fluid component or element; this means that this area preferably has a roughness less than 10 $\mu$m or less than 5 $\mu$m.

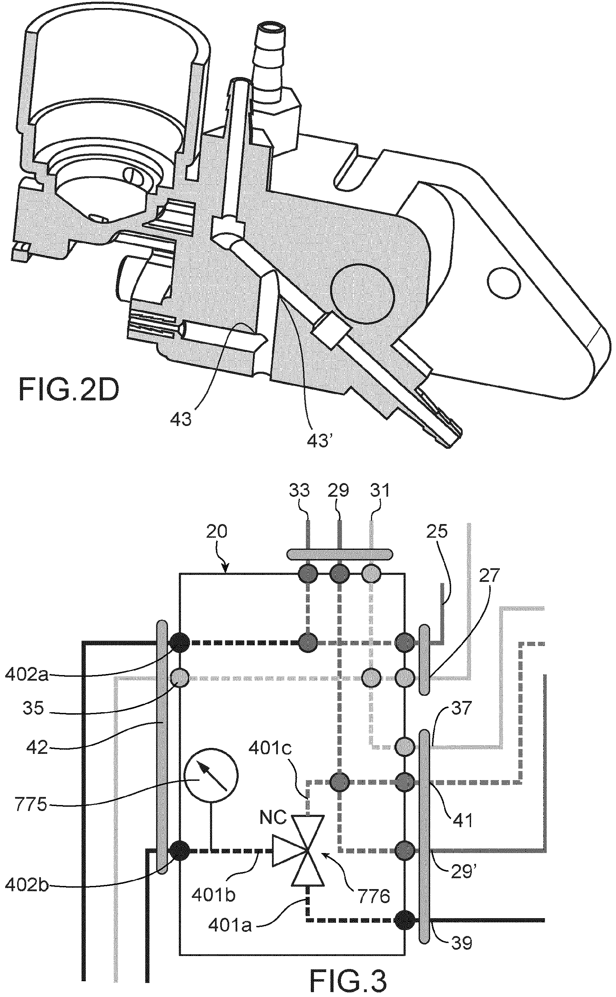

Figures 2C and 2D are cross sections of a device according to the invention and of the same device made with known techniques.

Due to the known manufacturing process (figure 2D), the ducts cross each other at right or sharp angles which creates sharp edges 43, 43' where ink or ink pigments can deposit and form residual solid growth on the ink flow. Removing such deposits is difficult and requires stopping printing operations and cleaning the circuit with fluid. Furthermore, such angles result in pressure losses.

Preferably one or more of the ducts of a manifold according to the invention (figure 2C) has curved segments or sections 241, 263, 301, thus avoiding sharp angles and the above-mentioned problems. Such curved segments or sections 241, 263, 301 have a non-zero but finite radius of curvature, in at least one plane which contains the direction of flow or a tangent to the flow; they allow a flow of liquid without pressure loss due to sharp angles. Preferably none of the ducts of a manifold according to the invention has sharp angles. Curved segments or sections 241, 263, 301 allow more ducts to intersect, because of the absence of sharp edges, and thus contribute to a compact device, with less pressure losses and no possibility for ink or ink pigments to form residual solid growth on the ink flow.

The manifold may further comprise sections having larger diameters, for example a chamber such as chamber 44 or chamber 72 (both described below), to form for example a sensor chamber (chamber 44) or a pressure regulator or damping section (chamber 72). In an ink jet printer, pressure variations may be due for example to pump cycles which are preferably limited or damped by a damping section.

It can comprise one or more chamber(s) 44 for a sensor, for example a pressure sensor 775 (see figure 3). Fluid flows from one of the ducts or one or more of the holes 401a-c (hole 401b in this example) into said chamber and then flows out of said chamber through another duct (duct 22 in this example).

The manifold may comprise ducts for a fluid to flow into one of said chamber(s) 44 and fluid to flow out of said chamber, for example after a measurement by a sensor in said chamber.

It may also have one or more duct(s) for a fluid to flow directly from one fluid connection area to another fluid connection area, or from one fluid connection area directly to a duct outlet or from a duct inlet directly to a fluid connection area, said fluid not flowing through a chamber 44 or through a valve. This is the case for ducts connecting different parts of an ink circuit, whereby the fluid component or the manifold is used as a fluid connection between said different parts (see also below explanation in reference to figure 3).

For example, inlet 37 (resp.30) is directly connected to outlet 31 in fluid connection area 42 (resp.31, see also fig.2C).

The manifold illustrated on figures 1-2C comprises several fluid inlets and several outlets. Each fluid connection area or surface 38, 40, 42 comprises at least one of said fluid inlets and outlets.

In this example each of said fluid connection area may comprise one or more opening(s) forming fluid inlet(s) or outlet(s) 401a, 401b, 401c (see also 402a and 402b on figure 2C) and one or more holes 402, 403 (see figure 2A) for fixing or securing a valve against said connection area 38, 40, 42. The area 38, 40, 42 itself is preferably smooth enough so that sealing means, for example a gasket, can be applied against it. For example, it can have a roughness less than 10 $\mu$m or less than 5 $\mu$m or less than 3 $\mu$m, for example 1,6 $\mu$m. This can result from the manufacturing process explained below (3D printing process); but the fluid manifold can be subject to a further processing step after 3D printing, it is for example machined or polished or smoothed or grinded, in order to reach the required roughness and/or it is subject to a chemical process (see below).

In an embodiment, sealing means, for example a gasket, are made integrally with the rest of the manifold. Said sealing means can be made for example in a compressible material. Two different materials can be 3D printed, for example with two different nozzles.

Several ducts may connect to a same end piece which thus forms a mechanical link between said ducts; for example, ducts 22, 24 are connected to end piece 42a which maintains their ends. Both ducts 22, 24 are also connected with means 41 and their other ends are connected to chamber 44.

Figure 3 is a schematic representation of the fluid flow inside the manifold 20 of figures 1 - 2C. The inlets, outlets, ducts bear the reference numerals of figures 1-2C.

A valve 776 is applied against contact area 40 (figure 2A) and sensor 775 is located in chamber 44 (see figure 2A). It allows a fluid to flow from inlet 402b (see figure 2C) to either outlet 401a or 401c or from inlet 401a or 401c to outlet 402b (depending on the position of the valve and on the flow direction).

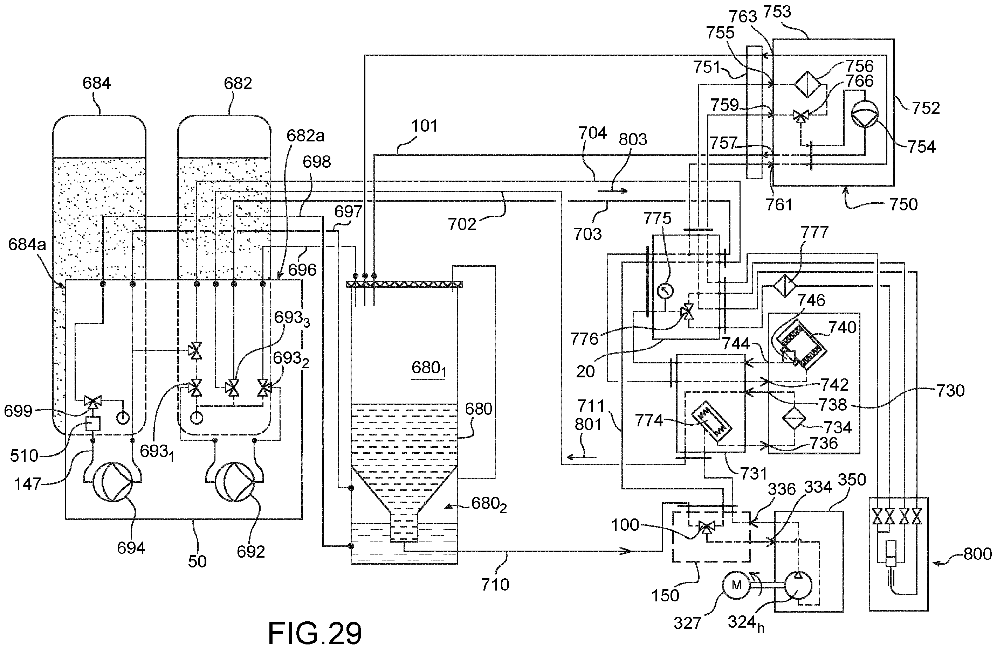

As can be understood from this figure one or more duct(s) are for a fluid to flow directly from one fluid connection area to another fluid connection area, or from one fluid connection area directly to a duct outlet or from a duct inlet directly to a fluid connection area, said fluid not flowing through a chamber 44 or through a valve. This is the case for ducts connecting inlet 27 and outlet 31, or inlet 25 and outlet 33: the fluid component or the manifold 20 is thus also used as a fluid connection between different parts of the printer in which it is incorporated. The manifold 20 can be used in a continuous ink jet printer, for example as illustrated on figure 29: a sensor 775 is housed in chamber 44 and a 3-way valve 776 is fixed against fluid connection area 40 of manifold 20.

The manifold illustrated on figures 2A-2C comprises several fluid connection areas or surfaces 38, 40, 42. Each extends in a different plane than the 2 others, thus allowing a connection of the manifold on each area to a different part or component of a printer, as illustrated on figure 29 where the manifold also bears the reference 20.

For example, the several fluid connection areas or surfaces 38, 40, 42 allow connections to valve 776 (area 40, figure 1) and to other portions of the ink circuit, for example to a fluid recovery module 750 (see description of figure 29 below), to part of a fluid circuit (see the connections to ducts 703, 704 on figure 29), and to the ducts connecting to the printing head 800.

The end 29, 31, 33, 35 of one or more ducts can be configured for a connection to flexible ducts or hoses and thus can be shaped as fir tree connections.

A fir tree connection is made of a tube with a diameter slightly higher than that of inside the hose to which it must connect, this tube being equipped with concentric barbs having a low angle in the insertion direction of the hose (the flexibility of the hose allows an easy insertion) and a sharp angle in the extraction direction (the hose is thereby retained during an extraction).

A fir tree connection may be machined (for example by a milling process) from a cylinder of material deposited by 3D printing (see further explanations below) or may be directly manufactured by 3D printing.

A manifold, or more generally a fluid component, according to the invention is or comprises one single block or a single piece made in a single material, for example stainless steel, with no interface between different pieces and different materials. There are thus no leak problems at such interfaces.

In an embodiment, the ducts of the component of figures 1- 2C can be embedded in a single piece or block of material.

In another embodiment, illustrated on figures 1- 2C the component or manifold is topologically optimised because there is no useless matter between ducts: only the functional parts are manufactured. In such case, the ducts walls have for example a thickness of between 1 mm and 10 mm, or between 3 mm and 5 mm, which saves all the material which is normally between the ducts. The thickness of the wall of the ducts can be selected depending on the material and the required rigidity of the component, in particular with respect to the fluid pressure (for example up to 10 bars).

A manifold or, more generally, a fluid component according to this embodiment of the invention can thus save a lot of material and be much lighter than a known manifold or fluid component. In a variant, the manifold, or fluid component can comprise material between the ducts, like in the embodiment of figures 4A - 4B, in which case it still one single piece or block but is heavier than the embodiment of figures 1-2C.

Another example of a fluid component 50 according to the invention is illustrated on figures 4A and 4B.

It comprises a body which has a front side 51 and a back side 68 parallel with each other; the thickness e (for example between 5 mm and 15 mm) of the body is preferably small compared to the width W (for example between 100 mm and 200 mm) and the height H of the front and back sides.

The body contains a plurality of conduits or ducts 52, 54, 56 which extend parallel to the front and the back sides 51, 68. Some of said ducts may not extend in a same direction: as can be seen on figure 4B, some ducts 54, 56 are not parallel with each other; some of them may comprise a first portion 561 and a second portion 562 with are not aligned with each other along a straight direction.

One or more conduit(s) or duct(s) may have an inner diameter of between 1 mm and 5 mm, for example between 2 mm and 5 mm or between 0,5 mm and 3 mm.

Some conduits or ducts 52, 54, 56 can be connected via further inside ducts 52a, 52b, 54a, 54b, 56a, 56b to fluid inlet(s) or outlet(s) 62, 64, 66 located for example on a fluid connection area 70 which is perpendicular to both front and the back sides 51, 68. Said fluid inlet(s) or outlet(s) 62, 64, 66 can be provided with counterbores 62a, 64a, 66a for gaskets.

Some conduits or ducts 52, 54, 56 can be connected to inlet(s) or outlet(s) located in another fluid connection area, for example the back side 68 (see figure 4A), via further inside ducts (not represented on the figure), essentially perpendicular to said other fluid connection area 68. Said fluid connection area 68 is provided with fluid inlet(s) and outlet(s) 681, 683, 685, 689, 691 to connect one or more fluid components with said conduits or ducts 52, 54, 56 of the manifold, said component comprising for example one or more valve(s) and/or one or more pumps. Other holes 687 can be provided to fix and secure such components with the manifold, for example with screws.

The ducts 52, 53, 54 of the device 50 illustrated on figured 4A and 4B are embedded in the material of the body which surrounds them and which is deposited during an additive manufacturing process.

Alternatively, the same ducts can be made as in the device of figures 1-2C, 3E, no material joining the walls of the ducts, in which case there are no complete front and back parallel sides, but fluid connection areas formed by end pieces such as illustrated on figures 1 and 2A, thin walls or connecting members linking and connecting the ducts where necessary to achieve the required mechanical stability. This embodiment also allows more flexibility, allowing the shape and/or the proportions of the component to be varied with respect to the original shape like the one illustrated on figures 4A and 4B. In this embodiment, the thickness of the wall of each duct is between 1 mm and 10 mm, for example between 3 mm and 5 mm, depending on the material of the component (for example plastic or metal) and on the required mechanical rigidity of the component, in particular with respect to the fluid pressure (for example up to 10 bars).

One or more of the ducts of the manifold illustrated on figured 4A and 4B may be straight while one or more of the ducts of this manifold can have curved segments or sections 561, 562, thus avoiding sharp angles and the above-mentioned problems. Such curved segments or sections 561, 562 have a non-zero, but finite, radius of curvature, for example at least 0.5 mm, in at least one plane which contains the direction of flow or a tangent to the flow; they allow a flow of liquid without pressure loss due to sharp angles. Preferably none of the ducts of a manifold according to the invention has sharp angles. Curved segments or sections allow more ducts to intersect, because of the absence of sharp edges, and thus contribute to a compact device, with less pressure losses and no possibility for ink or ink pigments to form residual solid growth on the ink flow.

Further fluid connectors can be connected to some ducts of the device 50, for example connectors 63, 65 comprising one or more cannula to plug cartridges. On the example of figure 4B, said connectors 63, 65 are connected to the front side 51 of the device but may not be manufactured by the same 3D printing process as the manifold. Said connectors 63, 65 are for connecting fluid cartridges, in particular a solvent cartridge and an ink cartridge of CIJ printer, for example as illustrated on, figure 29.

The manifold 50 illustrated on figured 4A and 4B can comprise further components, for example a chamber or a cavity 72 for a damper, said cavity being connected to one or more of the inside ducts of the device by a duct 72a.

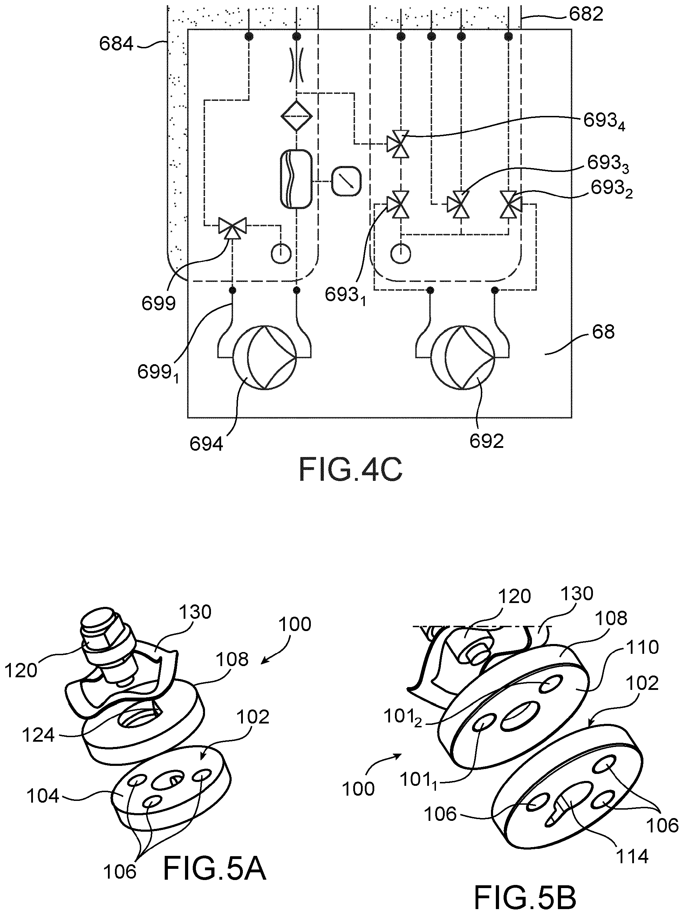

Figure 4C is a schematic representation of the manifold of figures 4A -4B. The inlets, outlets, ducts bear the reference numerals of figures 4A and 4B.

Several 3-way valves $693_1$-$693_4$, 699 are applied against contact area 68 (see figures 4B and 29). 2 pumps 694, 692 can be connected to said valves, in order to pump ink, respectively solvent, from ink cartridge 682 and from solvent cartridge 684. Ink flows from ink cartridge 682 connected to connector 65, then to valve $693_1$; $54_1$ corresponds to the outlet in the middle of valve $693_1$; $53_1$ corresponds to an end of conduit $699_1$ to circulate the ink towards the pump 694.

Preferably, said fluid connection areas or surfaces 68, 70 (see figures 4A and 4B) are smooth enough so that sealing means, for example a gasket, can be applied and pressed against it to form a leak tight assembly with another fluid component or element, for example a 3-way valve; this means that this area preferably has a roughness less than 10 $\mu$m or even less than 5 $\mu$m.

As already explained in connection with figures 1-2C, some ducts are for circulating ink, which comprises solvent but also pigments and binders. The inside walls, which are in contact with ink, are preferably as smooth as possible, their roughness being preferably less than 10 $\mu$m, or less than 5 $\mu$m, more preferably between 3 and 1,5 $\mu$m. Thus, pigments of ink cannot remain attached to the inner surface of the conduct, where they could form residual solid growth on the ink flow.

The manifold 50 can be used in a continuous ink jet printer, for example as illustrated on figure 29.

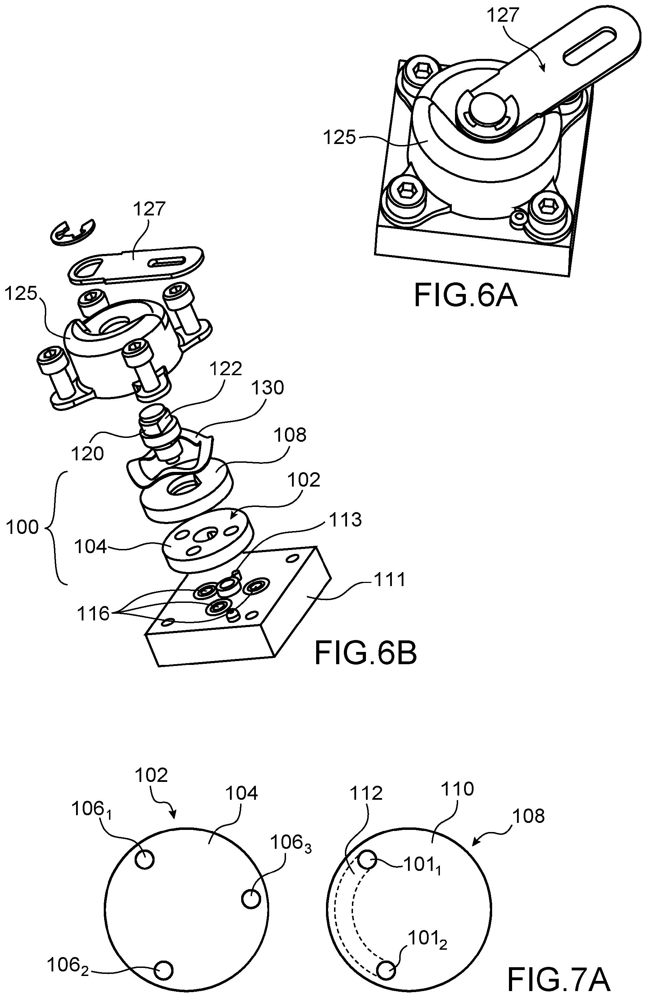

Another example of a fluid component 100 according to the invention is a hydraulic distributor and is illustrated on figures 5A - 5E; further embodiments being illustrated on figures 6A - 14C.

A first example of an embodiment of this hydraulic distributor according to the invention is illustrated on figures 5A-6B.

It comprises:

- A first portion 102, which has a flat surface 104 and which comprises, in this example, 3 though conducts or ducts 106 which open in said surface 104;
- A second portion 108, which has a flat surface 110 and which comprises at least one inner channel 112 (figure 5B) which extends within said second portion 108.

When the device is assembled, both flat surfaces 104, 110 are in friction contact with each other: they can be rotated relative to each other but remain in contact during the rotation. No fluid can flow out of the device between both surfaces: the contact at the interface between both surfaces is watertight. A device according to the invention does not require any gasket.

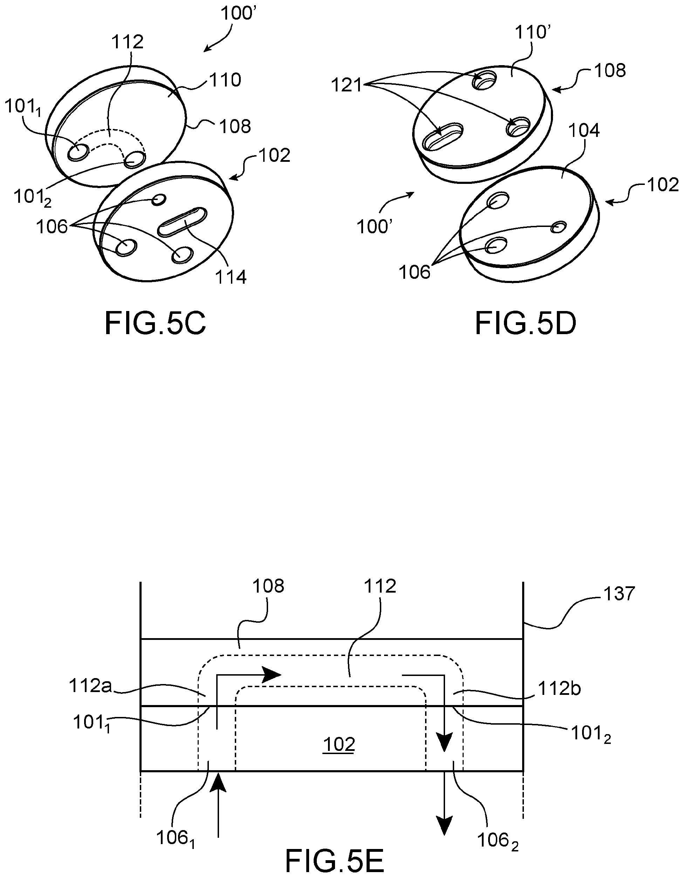

Flat surface 110 is a fluid connection area and comprises one fluid inlet $101_1$ and one fluid outlet $101_2$. As can be seen on figure 5E, a first duct 112a extends between the inlet $101_1$ and the inlet to said inner channel 112 and a second duct 112b extends between the outlet said inner channel 112 and the outlet $101_2$.

These different ducts are connected together by the material deposited during an additive process.

Means 130 (fig. 5A, 5B), such as a spring, can be used to press both surfaces against each other. The first portion rests for example on a support 111 (figure 6B) on which it can be maintained in a fixed position; each of the first portion and the support can comprise means 113 (figure 6B), 114 (figure 5B) which cooperate with each other to keep the first portion in a fixed position.

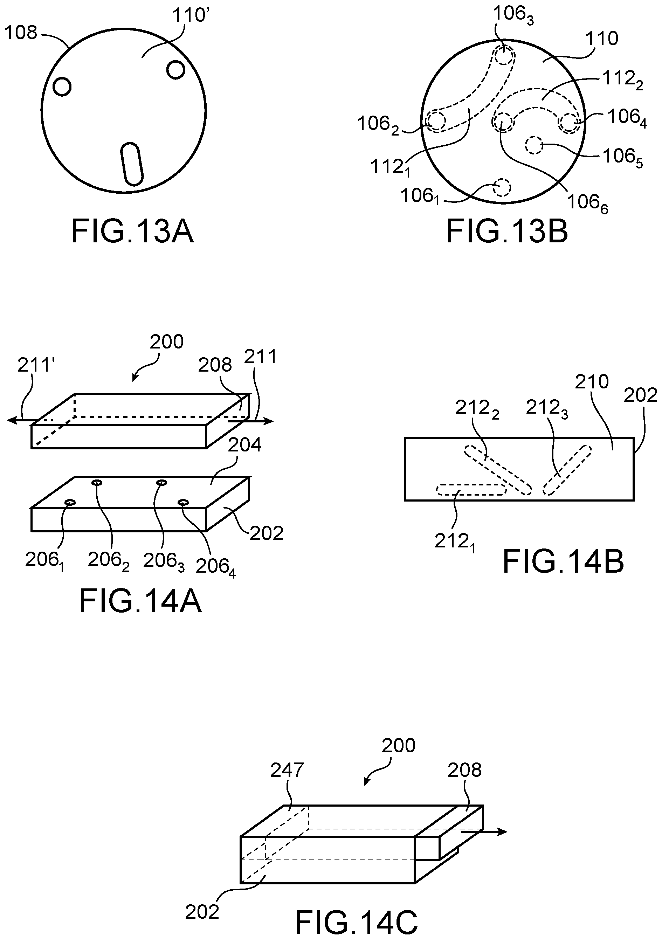

In this example both portions 102, 108 have a cylindrical shape, but other shapes are possible, as described below in connection with figures 14A-14C.

In an embodiment, the hydraulic distributor comprises a shaft 120 which extends along an axis of rotation to rotate portion 108 with respect to portion 102.

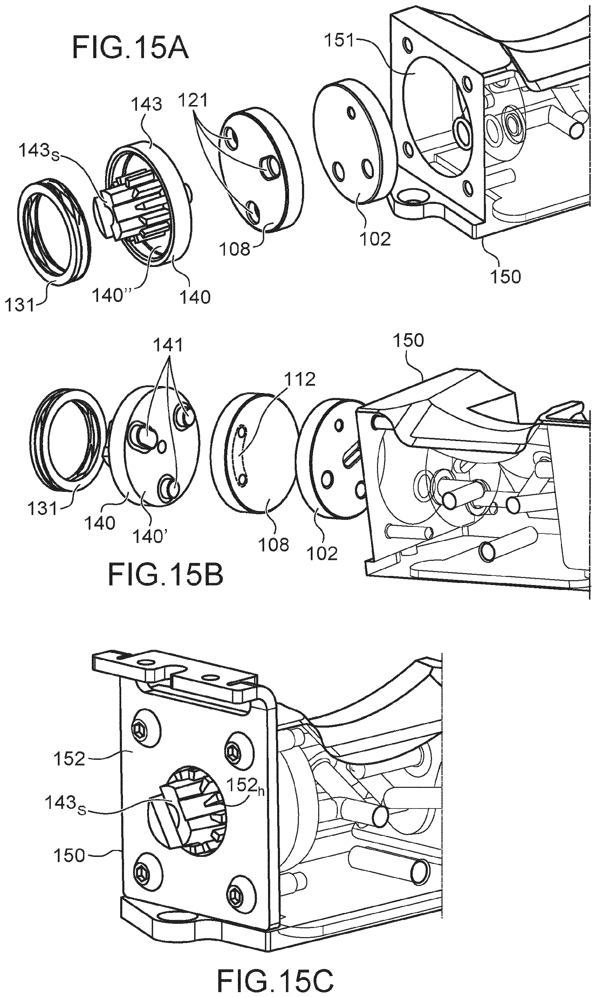

A handle 127 is represented on figures 6A and 6B to manually control said shaft. Alternatively, said shaft can be controlled by a motor (as explained below in connection with figures 15A-15C), which itself can be controlled by the controller of a printer.

A cover 125 can cover the two portions (figure 6B): one end of the shaft 120 rises above the top surface of the cover so that it can be connected to a handle 127 or to any transmission mechanism from a motor.

Figures 5C and 5D show a variant of a hydraulic distributor 100' according to the invention. Like on figures 5A and 5B:

- the first portion 102 comprises 3 though conducts or ducts 106 which open in the surface 104;
- the second portion 108 comprises an inner channel 112.

In this embodiment, the surface 110' of the second portion opposed to surface 110 comprises several holes 121 which can accommodate studs of a tool or of a driving section (see figures 15A-15B), to rotate the second portion 108 with respect to the first portion 102. Thus, a central shaft which traverses through the second portion is not needed.

Both first and second portions can be guided in rotation in a guiding cylinder 137, as illustrated on figure 5E, fluid entering the distributor through one ($106_1$) of said ducts 106, then flowing in said channel 112 and leaving the distributor through another one ($106_2$) of said ducts 106.

Another example of portions guided in rotation is illustrated on figures 15A-15C and commented below.

As illustrated on figure 5E, the hydraulic distributor of figures 5C and 5D can be inserted in guiding cylinder 137, which guides both portions 102, 108 with respect to each other, portion 102 being maintained fixed with help of means (like means 113, 114 described above) not illustrated on the figure.

The arrows of figure 5E show how the fluid flows into the distributor through duct $106_1$, then flows through inlet $101_1$, and in or through the duct 112a, the channel 112, the duct 112b and flows out of the distributor flows through outlet $101_2$ and through duct $106_2$. In a variant (not represented on figure 5E), the portion 102 has three through ducts, which are connected together in a certain relative position of both portions 102, 108.

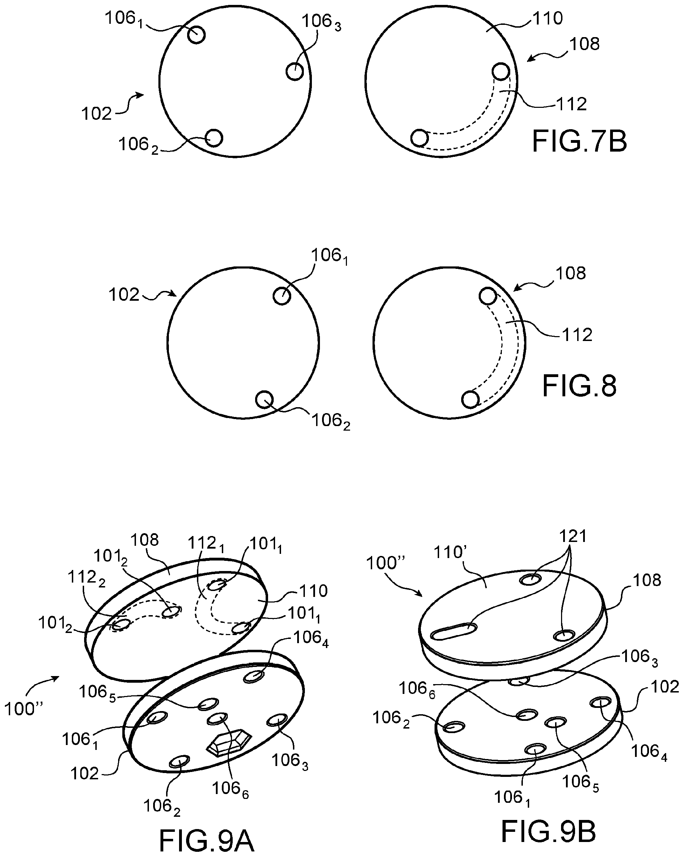

Figures 7A and 7B show surface 104 of the first portion (which comprises three through ducts $106_1$ - $106_3$) and surface 110 of the second portion (which comprises inlet $101_1$ and outlet $101_2$ and to which channel 112 is parallel); as illustrated on figures 7A and 7B (on which hole 114 is not represented):

* in a first position (figure 7A), a first pair of ducts $106_1$, $106_2$ open in said channel 112; a $1^{st}$ fluid can circulate from duct $106_1$ to duct $106_2$ (or from one duct of said first pair of ducts to the other duct) through said channel 112; no fluid can circulate from duct $106_1$ to duct $106_3$;
* and, in a second position (figure 7B), a second pair of ducts $106_1$, $106_3$ open in said channel 112; a $2^{nd}$ fluid can circulate from duct $106_1$ to duct $106_3$ (or from of one duct of said second pair of ducts to the other duct) through said channel 112, but the $1^{st}$ fluid can no longer circulate from duct $106_1$ to duct $106_2$.

In any embodiment of a hydraulic distributor according to the invention, a spring 130 can be used to press said first portion 102 against said second portion 108.

Fig.8 shows a simpler example of a hydraulic distributor (actually a hydraulic shutter) according to the invention, the first portion 102 comprising two through ducts $106_1$, $106_2$ and the $2^{nd}$ portion 108 having one channel 112. In a first position of the $2^{nd}$ portion, the channel 112 connects both ducts $106_1$, $106_2$ and the fluid can circulate from one of said ducts to the other one. In a second position (not represented) of the $2^{nd}$ portion, the channel 112 does not connect ducts $106_1$, $106_2$ together and the fluid circulation is stopped.

Fig. 9A and 9B show another example of a hydraulic distributor 100" according to the invention, the first portion 102 comprising 6 through ducts $106_1$ - $106_6$ and the $2^{nd}$ portion 108 having 2 channels $112_1$, $112_2$.

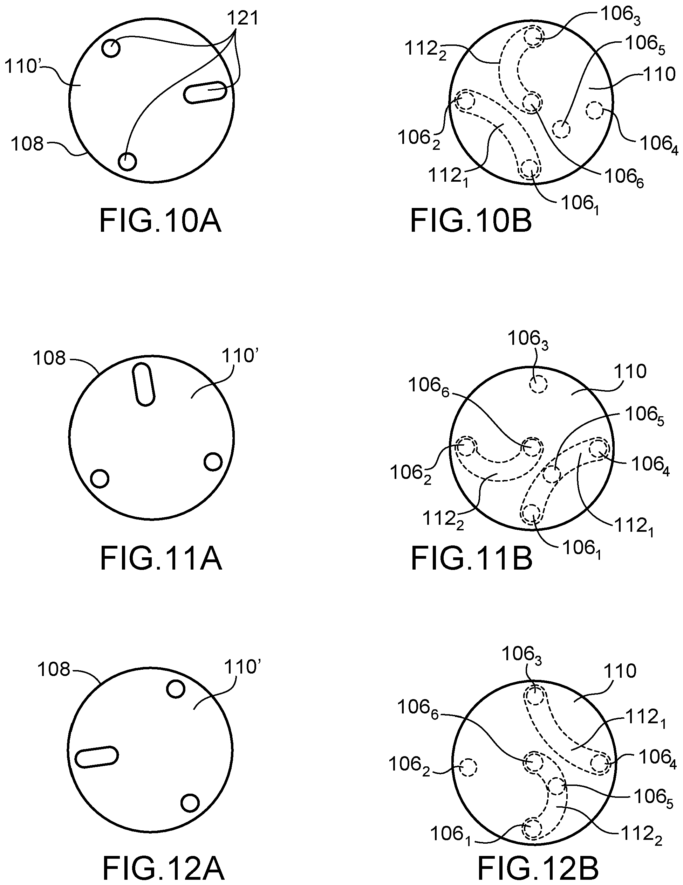

Figure 10A (resp.11A, 12A, 13A) shows the surface 110' of the second portion 108 opposed to surface 110; this surface 110' can comprise several holes 121 as explained above to drive the second portion with respect to the first portion.

Figure 10B (resp.11B, 12B, 13B) shows the surface 110 of the second portion 108 which comprises the 2 channels $112_1$, $112_2$.

4 different relative positions of the both portions are illustrated on figures 10A-13B to connect different pairs or series of through ducts $106_1$ - $106_6$; figures 10B, 11B, 12B, 13B show the different positions of the 2 channels $112_1$, $112_2$ and the projection on surface 110 of the positions of the ducts $106_1$ - $106_6$:

- in figures 10A and 10B, channel $112_2$ connects through ducts $106_3$ and $106_6$ and channel $112_1$ connects through ducts $106_2$ and $106_1$;
- in figures 11A and 11B, channel $112_1$ connects through ducts $106_1$, $106_5$ and $106_4$ (thus allowing flow from one of said 3 ducts $106_1$, $106_5$ and $106_4$ to the two other ducts or a flow from two of said ducts to the third one) and channel $112_2$ connects through ducts $106_2$ and $106_6$;
- in figures 12A and 12B, channel $112_1$ connects through ducts $106_3$ and $106_4$ and channel $112_2$ connects through ducts $106_1$, $106_5$ and $106_6$ (thus allowing flow from one of said three ducts $106_1$, $106_5$ and $106_6$ to the two other ducts or a flow from two of said ducts to the third one);
- in figures 13A and 13B, channel $112_1$ connects through ducts $106_3$ and $106_2$ and channel $112_2$ connects through ducts $106_4$ and $106_6$.

The above example of Fig. 9A and 9B, and those of figures 11A-11B and 12A-B, shows that, in one or more relative position(s) of both portions, a hydraulic distributor according to the invention can connect more than two ducts together.

A linear hydraulic distributor 200 according to the invention is disclosed in connection with fig.14A-14C; like the circular device disclosed above, it can have any number of through ducts 206, and any number of appropriate channels to establish the required connections between the through ducts in the different relative positions of the two portions 202, 208.

As illustrated on figures 14A and 14B, a linear hydraulic distributor 200 according to the invention implements a relative translation of the 2 portions rather than a rotation.

Both portions can be maintained by lateral guiding walls 247 guiding the translation of one portion of said hydraulic distributor with respect to the other; this translation can be actuated by an actuating link or a button or by a motor, for example an electric or hydraulic or pneumatic motor, coupled to one of the portions 208, 202

A spring can be used between one of the guiding walls, parallel to the direction of the translation to press said both portions of said hydraulic distributor against each other.

In the above examples:

- both portions are preferably made of a material chemically resistant to at least one organic solvent, for example a solvent suitable for CIJ printers, for example ethanol and/or methyl ethyl ketone (MEK) and/or methyl isopropyl ketone (MIPK);
- and/or the surfaces 104, 110 (resp.204, 210) can have a roughness between 0,4 and 0,8 $\mu$m, which favors the water tightness of the system between the surfaces which move with respect to each other.

In the above examples, one or more inner channel(s) 112, $112_1$, $112_2$, $212_1$-$212_3$ extend(s) parallel to the surface 110 and is/are made inside said $2^{nd}$ portion (it does not appear in the surface 110 of said $2^{nd}$ portion).

Said one or more inner channel(s) in a distributor 100, 100', 100", 200 according to the invention offer(s) the advantage of avoiding any edge on the surface which is in contact with surface 104 of the 1st portion 102 of the device; indeed, dirt and/or ink can be deposited at these edges and dry, which can pose problems of tightness of both contacting surfaces 104, 110. And an inside channel can be cleaned by a flow of solvent.

In the above examples, any of the ducts 106, $106_1$-$106_5$, 206, $206_1$-$206_4$ and/or of the channel(s) 112, $112_1$-$112_2$, $212_1$-$212_3$ can have a diameter of up to 2 mm or more, allowing important flow rates, up to 10 l/h or 15 l/h or even more, for example 20 l/h or 100 l/h. Some solenoid valves are compatible with such flow rates, but they are bulky, heavy and expensive.

In the above examples, the second portion 108 of the device comprises at least one inside channel in which a fluid can flow parallel to surface 110 or 110'.

Assembling steps of a hydraulic distributor according to the invention with a body or manifold 150 are illustrated on figures 15A-15B.

A driving section 140 has 2 parallel surfaces 140' and 140". It comprises studs 141 distributed on one of said surface 140' to penetrate into holes 121 of second section 108.

The other main surface 140" of said driving section 140 comprises a drive shaft 143s.

A pressure spring 131 presses on the driving section of the hydraulic distributor when the device is assembled and accommodated in a hole 151 of a body or manifold 150 (figure 15C), said spring being compressed between said driving section 143 and an end plate 152 of the body 150 which closes the hole 151. The driving shaft 143s traverses the plate 152 through a central hole $152_h$. A motor (not illustrated on the figure), for example an electric or hydraulic or pneumatic motor, can drive the shaft 143s, and the second portion 108, in rotation, to change the position of the channel 112 with respect to the first portion, thus varying the fluid communication of the distributor, for example as illustrated on figures 7A and 7B.

As can be understood from the above description, a hydraulic distributor according to the invention, in particular for an ink-jet printer, can comprise:

- a first portion 102, 202 comprising at least one 1st planar surface 104, 204, a second portion 108, 208, comprising at least one 2nd planar surface 110, 210, both planar surfaces being in friction contact with each other;
- at least one 1st conduct 106, $106_1$ - $6_6$, in said 1st portion, each comprising a 1st opening in said 1st planar surface;
- at least one channel $112_1$ - $112_4$, $212_1$ - $212_3$ extending in said second portion 108, 208, to conduct a fluid in a direction substantially parallel to said 2nd planar surface;
- at least one 2nd conduct in one of said portions, comprising a 2nd opening in said 1st planar surface or in said 2nd planar surface or in said at least one channel.

It can also comprise means 122, 127 for moving both portions with respect to each other, so that:

* in a first position, at least both the 1st opening and the 2nd opening open in said at least one channel and are connected through said at least one channel;
* and, in a second position, one of said 1st opening and 2nd opening does not open in said at least one channel, and are not connected through said at least one channel.

Said means, for example a motor, for moving both portions of said hydraulic distributor with respect to each other can allow a movement:

- in translation along an axis parallel to both said 1st planar surface and said 2nd planar surface;
- or circularly around an axis perpendicular to both said 1st planar surface and said 2nd planar surface ; for example, said means comprise a rotating shaft, which extends along said axis. One end of said shaft can be inserted in a hole in said 2nd portion; in particular embodiment, each of said shaft and said hole can comprise a flat surface which extends parallel to said axis and which cooperate which each other to rotate both said shaft and said 2nd portion.

In both the circular and the translation embodiments, means, for example a spring, can be used for pressing said 1st planar surface and said 2nd planar surface against each other.

Said 1st portion can for example comprise n conducts, for example at least 2 or 3 conducts, each comprising an opening in said 1st planar surface; for n=3, the at least one channel in said 2nd portion can connect, in the first position with respect to the 1st portion, a first pair of said at least 3 conducts and, in a second position with respect to the 1st portion, another pair of said at least 3 conducts.

Said 2nd portion can comprise a plurality of channels extending parallel to said 2nd planar surface, to conduct a fluid in at least two different directions substantially parallel to said 2nd planar surface.

A method for operating a hydraulic distributor according to the invention can comprise moving both portions with respect to each other between said first position and said second position, so that:

* in said first position, both the 1st opening and the 2nd opening open in said at least one channel and a fluid, for example ink and/or solvent, flows from one of said opening to the channel and then to the other of said openings;
* and, in said second position, one of said 1st opening and 2nd opening does not open in said at least one channel, and no fluid flows from one of said openings to the other one.

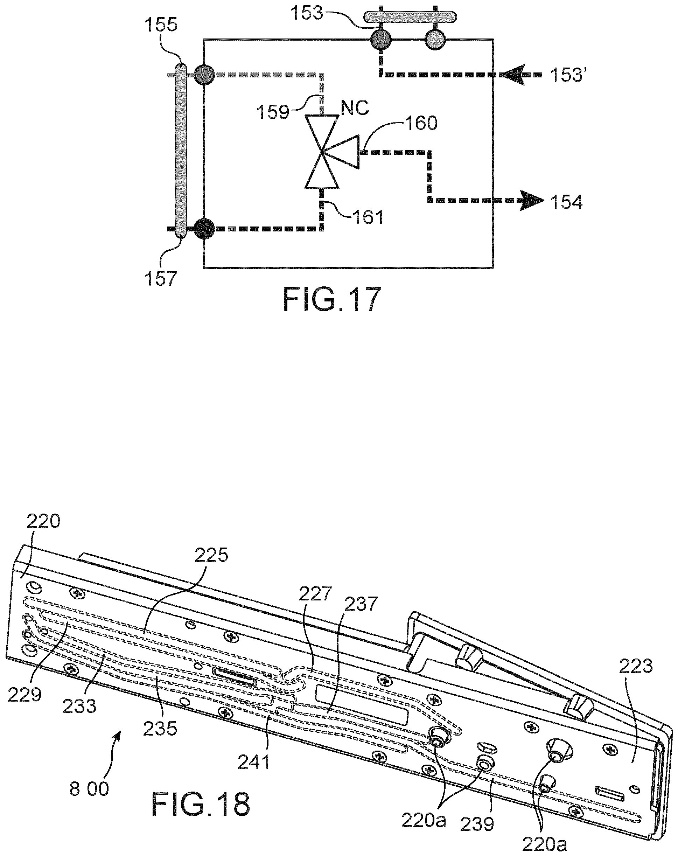

A hydraulic distributor according to the invention is adapted to a printer comprising a single-nozzle or a multi-nozzle ink jet print head, as represented on figures 1 and 17 of EP 17186002.

A hydraulic distributor according to the invention can be implemented in any part of a fluid circuit of a CIJ printer, for example the CIJ printer illustrated on figure 29 and commented below, to replace any known valve, in particular any solenoid valve.

In particular a hydraulic distributor according to the invention can be positioned upstream of any pump (for example pump 324h of figure 29) which pumps ink or solvent from an ink tank 680 or from an ink cartridge 682 or from a solvent tank or cartridge 684 and which is to be sent to a main tank or to a print head 800 of a CIJ printer.

Alternatively, it can be positioned downstream of any pump which pumps ink or solvent, with a pressure of fluid circulating in said pump of up to several bars, for example 3 or 5 bars.

A hydraulic distributor according to the invention can be operated so as to guide a flow of fluid, for example ink and/or solvent of an ink jet printer:

- from at least one duct or inlet duct,
- then possibly through a channel like channel 112, 212, thus flowing partly parallel to surface 110 or 110';
- and then through at least another duct or outlet duct.

The fluid flow rate can be comprised between 1l/h or 5 l/h and 10 l/h or 15 l/h or even more, for example 20 l/h or 100 l/h.

The pressure of fluid circulating in a hydraulic distributor according to the invention can be higher than 1 or 2 bars, and up to several bars, for example less than 3 or 5 bars or even 10 bars.

Said fluid can be pumped by a pump of an ink circuit of a CIJ printer.

Portion 108, 208 of a hydraulic distributor according to the invention is manufactured by a process according to the invention. Portion 102, 202 can be manufactured by a process according to the invention.

Flat surface 110, 210 is a fluid connection area and comprises one fluid inlet $101_1$ and one fluid outlet $101_2$. As can be seen on figure 5E, a first duct 112A extends between the inlet $101_1$ and the inlet to said inner channel 112, 212 and a second duct 112b extends between the outlet said inner channel 112 and the outlet $101_2$.

As explained below, a manufacturing process of at least portion 108, 208 of a hydraulic distributor according to the invention can comprise a 3D printing process.

Preferably:

- the surface 110, 210 has a roughness less than 1 $\mu$m or even comprised between 0,4 $\mu$m and 0,8 $\mu$m;

- and/or the inner surface of at least part of one or more of the ducts and inner channel 112, 112a, 112b, 212 has a roughness less than 10 $\mu$m or less than 5 $\mu$m.

If a desired roughness is not obtained by the 3D printing process, a further smoothing step (mechanical and/or chemical) can be implemented.

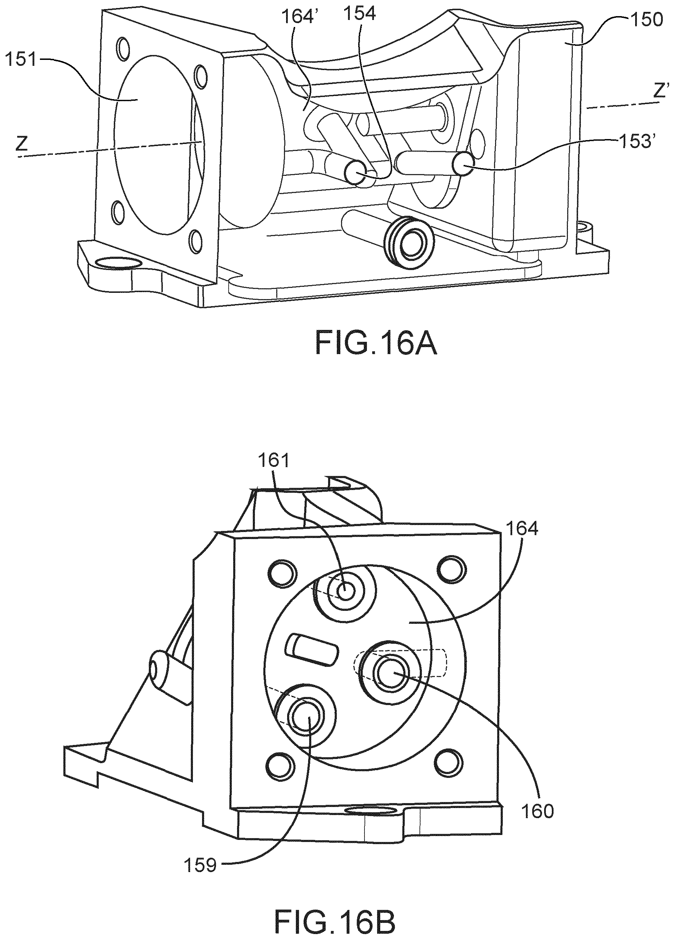

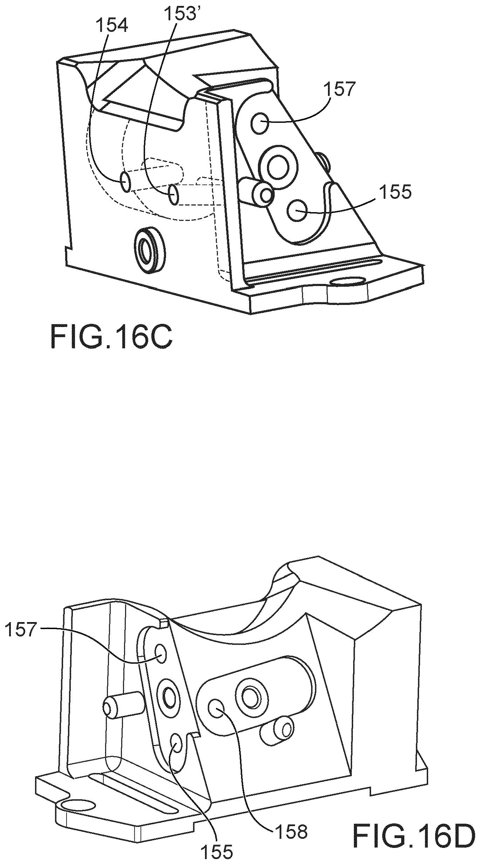

The body or manifold 150 illustrated on figures 15A-15C can itself be manufactured according to the invention. It is illustrated on figures 16A - 16D and a schematic representation of the fluid flows through said body or manifold is illustrated on figure 17.

The hydraulic distributor, for example, a rotating distributor according to any of figures 5A - 13B (not represented on these figures 16A-16D) can connect a fluid inlet 155, resp. 157, to a fluid outlet 154 through outlet 159, resp. 161. Each of the 3 inlets 159, 160, 161 corresponds to one of the outlets 106 (see figure 5C), the duct 112 connecting two of these outlets 106 to two of said 3 inlets, depending on the position of the second portion 108.

A fluid inlet 153' is connected to a fluid outlet 153 because it is more convenient to have a through duct in the body 150 than to connect the corresponding inlet/outlet of the ink circuit by a flexible duct.

Body 150 is represented here for 3 inlets 159-161. In a variant, body 150 has 2 inlets on surface 164 or more than 3 inlets, which are connected to appropriate ducts inside the body 150 and to corresponding outlets.

Due to its elongated shape along a ZZ' axis, this body can connect one or more fluid inlet(s) located on surface 164, which is substantially perpendicular to said axis, to an outlet located laterally, for example on a face or a side 164' of the device which is substantially parallel to said axis. One or more in conduits of said body can have curved shape, to guide the flow of fluid from a direction substantially parallel, respectively perpendicular, to a direction substantially perpendicular, respectfully parallel, to said axis ZZ'.

The body 150 is manufactured by an additive process as explained below.

The second portion of a hydraulic distributor according to any of figures 5A - 13B is applied against contact surface 164, which has a roughness preferably less than 10 $\mu$m, more preferably less than 5 $\mu$m. Preferably, each of the ducts connecting an inlet and an outlet of this body 150 has an inner roughness of less than 10 $\mu$m.

The body or distributor 150 comprises several fluid connection areas or surfaces 164, 164' etc which extend in different planes, thus allowing a connection of the body or manifold on each area to a different part or component of an ink circuit of a CIJ printer, for example the one illustrated on figure 29.

For example, the several fluid connection areas or surfaces 164, 164' allow connections to hydraulic distributor 100 and to other portions of the ink circuit, for example to a pump module 350 (see description of figure 29 below), to part of a fluid circuit (see the connections to ducts 710, 711 on figure 29), and to another module 731 (described below).

Preferably:

- the areas or surfaces 164, 164'etc (which are fluid connection areas) are smooth enough so that sealing means, for example a gasket, can be applied and pressed against any of them to form a leak tight assembly with another fluid component or element, for example the hydraulic distributor 100; this means that these areas preferably have a roughness less than 10 $\mu$m or even less than 5 $\mu$m;
- and/or the inner surface of at least part of one or more of the ducts and channels inside the body or distributor 150 has a roughness less than 10 $\mu$m or less than 5 $\mu$m, more preferably between 3 and 1,5 $\mu$m. Thus, pigments of ink cannot remain attached to the inner surface of the conduct, where they could form residual solid growth on the ink flow.

If a desired roughness is not obtained by the 3D printing process (see below), a further smoothing step (mechanical and/or chemical) can be implemented as explained below.

One or more of the ducts of the body or manifold 150 illustrated on figured 16A-17 may be straight while one or more of the ducts of this manifold can have curved segments or sections, thus avoiding sharp angles and the above-mentioned problems. Such curved segments or sections have a non-zero radius of curvature, for example at least 0.5 mm, in at least one plane which contains the direction of flow or a tangent to the flow; they allow a flow of liquid without pressure loss due to sharp angles. Preferably none of the ducts of a body or manifold 150 according to the invention has sharp angles. Curved segments or sections allow more ducts to intersect, because of the absence of sharp edges, and thus contribute to a compact device, with less pressure losses and no possibility for ink or ink pigments to form residual solid growth on the ink flow.

The ducts illustrated on figured 16A-17 are embedded in a block or a piece of material forming the component or fluid manifold 150. Alternatively, the component or fluid manifold 150 can be made as in the device of figures 1-2C, 3, no material joining the walls of the ducts in which case there are no complete front and back parallel sides, but fluid connection areas formed by end pieces such as illustrated on figures 1 and 2A. One or more thin wall or connecting member (such as a beam or a link) can possibly link the ducts where necessary to achieve the required mechanical stability. In this embodiment, the thickness of the wall of each duct is between 1 mm and 10 mm, for example between 3 mm and 5 mm, depending on the material of the component (for example plastic or metal) and on the required mechanical rigidity of the component, in particular with respect to the fluid pressure (for example up to 10 bars).

The embodiments of this component with no material between at least two parts, for example two ducts, are particularly interesting because of the advantages associated to them, in particular the limited amount of raw material required for manufacturing them and the limited weight of the component, and also of the printer in which they are incorporated. As already explained above, there is no useless matter between the different parts and only the functional parts are manufactured, which saves all the material which is normally between the ducts.

A printing head of a CIJ printer can comprise one or more part(s) according to the invention.

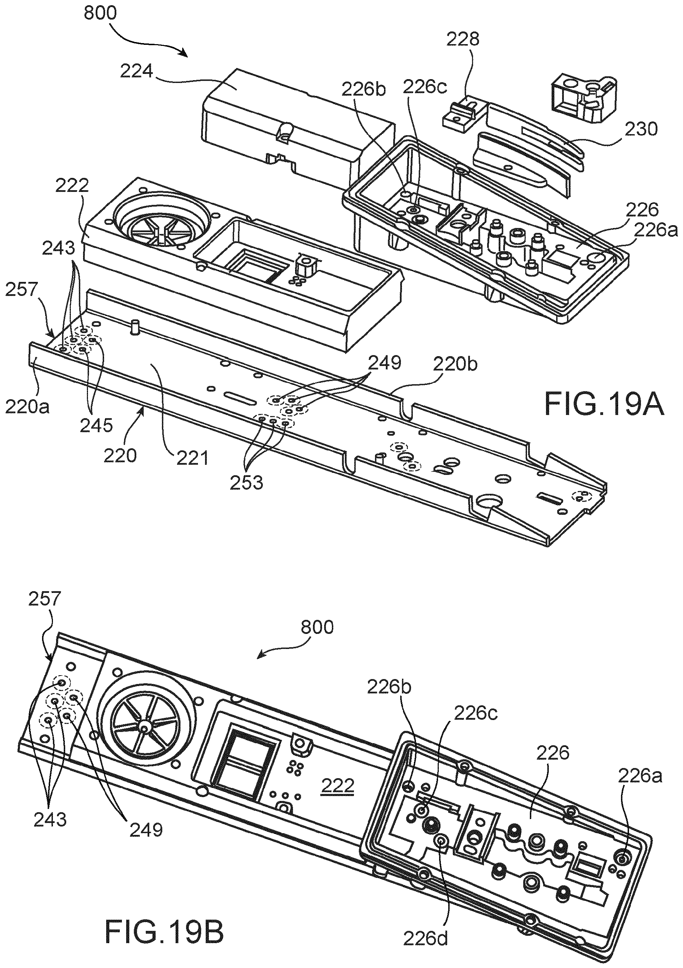

An example of an embodiment of a printing head 800 according to the invention is illustrated on figures 18 and 19A-19B.

It comprises a supporting base 220, which incorporates a manifold according to the invention or in which said manifold is embedded.

Said supporting base can support one or more individual components like a solenoid valve unit 224, an ink drop generating unit 228 and charge and deviation electrodes 230. The ink drop generating unit 228 comprises a stimulation body and a nozzle through which the drops are ejected.

The solenoid valve unit 224 can be mounted on a solenoid valve support 222. The ink drop generating unit and both charge and deviation electrodes can be mounted on a drop generator and electrodes support 226. Both solenoid valve support 222 and drop generator and electrodes support 226 can be fixed or secured against an upper or front surface 221 of the supporting base 220 of the printing head, for example by screwing. They are both comprised between lateral edges 220a, 220b of the supporting base 220. Alternatively, the supporting base 220 and the solenoid valve support 222 and/or the drop generator and electrodes support 226 form a single block (or a monolithic or integral structure) and are formed together by additive printing.

Usually, the head is covered by a hood (not represented on the figures) so that a user cannot easily access to the electrodes and high voltage portions.

The base 220 extends between said upper or front surface 221, and a lower or back surface 223. It comprises a network of fluid conduits for circulating the fluids (ink and/or solvent) to the ink drop generator and returning the fluids from the ink recovery gutter.

Said network comprises at least one or more conduits for circulating ink, one or more conduits for circulating solvent, and one or more conduits for circulating ink recovered from said print head back to the ink circuit of a CIJ printer.

As can be seen on figure 19A, base 220 comprises:

- several through holes 243, 245 for fluid connections for introducing one or more fluids from upper or front surface 221 into one or more of said conduits of the network inside the base and for recovering one or more fluid out of said network of conduits; the area 257 of the upper or front surface 221 where these holes 243, 245 are located forms a fluid connection area: indeed a flexible cable provides the print head with fluids (ink and solvent) and with power and recovers ink which is recirculated in the circuit, and the area 257 is for the fluid connection of this cable to the print head;

- several through holes 249, 253 for introducing one or more fluids from one or more conduits of said network (located or embedded inside said body 220) into one or more valve(s) (located on the upper or front surface 221) and from said one or more valve(s) into one or more of said conduits. The area where these holes are formed is also a fluid connection area;

- at least one hole 226a for recovering ink not used for printing and recirculating in one conduit of said network (also located or embedded inside said body 220), possibly into one or more valve(s) (located on the upper or front surface 221) and from said one or more valve(s) into one of said conduits back to the ink circuit of the printer. The area where this hole 226a is formed is also a fluid connection area.

Figure 19A shows:

- A conduit 225 for circulating solvent from one of inlets 243 (figure 19) to one or more valve(s) (located on the upper or front surface 221); another conduit 227 is for circulating fluid, notably said solvent, from said valve(s) to the ink drop generating unit 228;

- A conduit 229 for circulating ink from one of inlets 243 (figure 19) to one or more of said valve(s), said ink circulating from said one or more of said valve(s) to the ink drop generating unit 228 through conduit 227;

- A conduit 239 for returning ink from the recovery gutter to one or more of said valve(s) and a conduit 235 for returning said ink from one or more of said valve(s) to one of the outlets 245.

The network of ducts can further comprise:

- A conduit 241 for circulating air from one of inlets 243 to the print head;

- and/or one or more conduit(s) 233, 237 for recovering ink from the ink drop generating unit 228 back to one of the outlets 245, possibly through one or more valve(s); this allows a further cleaning of the ink circuit.

Figure 19B shows an assembly of the base 220 together with the supports 222 and 226. References 226a-226d are openings corresponding to through holes of said base 220 at least for the recovery of ink from the gutter (opening 226a) and for injecting ink and solvent (226d) from conduit 227 into the ink drop generating unit 228; openings can possibly be included for injecting air (226b) and/or for recovering ink (226c) from the ink drop generating unit 228 back to conduit 237.

Through connectors 220a (figure 18) are for the electric connections to supply the stimulation body, the charge electrodes and the deviation electrode(s).

Said supporting base 220 is manufactured according to the invention, by an additive manufacturing technique. In a particular embodiment, said base plate and said solenoid valve support body and/or drop generator body are manufactured by a same additive manufacturing technique, area 257 remaining a fluid connection area to connect the flexible supply cable of the printer to the print head.

The ducts of the network inside the base are in a same plane. The printing head, and in particular said ducts, can have one or more of the features already described above in connection with other embodiments. In particular:

- the fluid connection area 257 is preferably smooth enough so that the end of the flexible cable can be fluid tight connected to this area: for example sealing means, for example a gasket, can be applied and pressed against said area to form a leak tight assembly with the flexible cable; this means that these areas preferably have a roughness less than 10 μm or even less than 5 μm;

- and/or the inner surface of at least part of one or more of the ducts and channels of the network inside the base 220 has a roughness less than 10 μm or less than 5 μm, more preferably between 3 and 1,5 μm. Thus, pigments of ink cannot remain attached to the inner surface of the conduct, where they could form residual solid growth on the ink flow.

If a desired roughness is not obtained by the 3D printing process (see below), a further smoothing step (mechanical and/or chemical) can be implemented as explained below.

One or more of the ducts of the network of base 220 illustrated on figured 18 may be straight while one or more of the ducts of this manifold can have curved segments or sections, thus avoiding sharp angles and the above-mentioned problems. Such curved segments or sections have a non-zero radius of curvature, for example at least 0.5 mm, in the plane of the network which allows a flow of liquid without pressure loss due to sharp angles. Preferably none of said ducts has sharp angles. Curved segments or sections contribute to a compact device, with less pressure losses and no possibility for ink or ink pigments to form residual solid growth on the ink flow.

A printing head according to the invention can be used in combination with a CIJ printer, for example as illustrated on figure 29.

As can be understood from the above description, a manifold according to the invention, in particular for a printing head of an ink-jet printer, can be be in, or can be embedded in, a base or a back wall of said printing head and comprising several ducts, for example:

- at least one duct for supplying ink and/or solvent to the printing head (in particular to at least one drop generator);
- and at least one duct for recovering unprinted ink from a gutter.

Said manifold can further comprise the features explained above in connection with figures 18-19B.

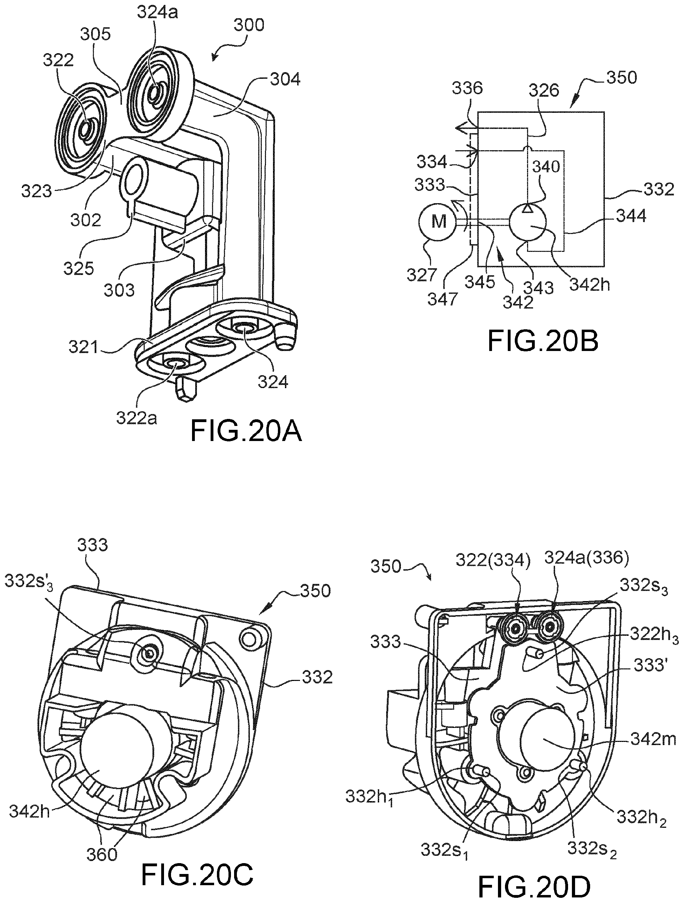

Another example of a fluid component according to the invention is a fluid connector 300, illustrated on figures 20A and also explained in an application to a pump module 350 on figures 20B-20D.

This fluid connector 300 comprises:

- 2 conduits or ducts 302, 304, parallel to each other, each connecting an inlet (such as inlet 322, 324) and the corresponding outlet (such as the outlet 322a, 324a);
- one or more connections means 303, 305 connecting both conduits 302, 304 fixed with respect to each other;
- two end pieces 321, 323, each having an end surface forming a fluid connection area, in which an inlet 322 (resp.324) and an outlet 324a (resp.322a) open.

Each conduit can have a bend to guide a fluid as it flows from an inlet 322 (resp.324) to an outlet 322a (resp.324a) of the connector; conduit 302 can be used to guide a fluid flowing from the fluid circuit of a CIJ printer into another fluid component of said fluid circuit, for example a pump, said fluid circulating from inlet 322 to the outlet 322a and then into the other fluid component ; conduit 304 can be used to guide a fluid flowing out of said other fluid component, for example said pump, said fluid circulating from an inlet 324 to the outlet 324a and then into the fluid circuit of a CIJ printer.

As can be seen on figure 20A, each inlet/outlet surface has one or more recess(es) to receive one or more sealing means, for example one or more gaskets.

Said fluid connector can further comprise one or more alignment member(s) 325 (for example one or more pin(s) or rod(s) or slug(s)) adapted to fit into corresponding slot(s) or hole(s) to position the connector with respect to a module in which it is integrated, for example as illustrated in figures 20B-20D (in a variant the one or more alignment member(s) 325 are in the module and the corresponding slot(s) or hole(s) are in the connector).

The connector 300 and its conduits or ducts can have one or more of the features already described above in connection with other embodiments. In particular:

- one or more of the inlets 322, 324 and the outlets 324a, 322a is/are preferably smooth enough so that sealing means, for example one or more gasket(s), can be applied and pressed against it/them to form one or more leak tight assemblies with another component or duct; this means that these areas preferably have a roughness less than 10 $\mu$m or even less than 5 $\mu$m;
- and/or the inner surface(s) of at least part of the ducts 302, 304 has a roughness less than 10 $\mu$m or less than 5 $\mu$m, more preferably between 3 and 1,5 $\mu$m. Thus, pigments of ink cannot remain attached to said inner surface(s), where they could form residual solid growth on the ink flow.

If a desired roughness is not obtained by the 3D printing process (see below), a further smoothing step (mechanical and/or chemical) can be implemented as explained below.

One or more of the ducts 302, 304 may be straight while one or more of said ducts of this manifold can have curved segments or sections, as shown on figure 20A, thus avoiding sharp angles and the above-mentioned problems. Such curved segments or sections have a non-zero radius of curvature, for example at least 0.5 mm, in the plane of the network which allows a flow of liquid without pressure loss due to sharp angles. Preferably none of said ducts has sharp angles. Curved segments or sections contribute to a compact device, with less pressure losses and no possibility for ink or ink pigments to form residual solid growth on the ink flow.

An example of a pump module (or ink pressure pump module) 350 is illustrated on figure 20B. It comprises a housing or support 332, possibly including a front side or cover 333; said module comprises a fluid inlet 334 and a fluid outlet 336; inside the module or its housing, at least the hydraulic part 342h of a pump 342 is connected to said fluid inlet and said fluid outlet. As illustrated on figure 20B:

- the motor 321 of the pump 342 can be located outside the pump module, because it is robust and sturdy; in such case, the axis 345 of the pump, which connects the motor and the hydraulic part, extends through the cover 333 of the pump module 350, only the hydraulic part of the pump being contained in housing 332; in a variant, the pump, including its hydraulic part and its motor is completely housed in the pump module;
- the pump inlet 343 and the pump outlet 340 can be directly connected to the fluid inlet 334 and the fluid outlet 336 by ducts 344, 326, the fluid circulating from said fluid inlet 334 to said pump 340 and then from said pump 340 to said fluid outlet 326; preferably no other fluidic element is present between the fluid inlet 334 and the pump inlet 343 and between the fluid outlet 336 and the pump outlet 340.

The pump illustrated on figure 20B comprises a hydraulic part 342h, a motor 327 and an axis 345 coupling said hydraulic part 342h and said motor 342; the pump can be of the magnetic type. Such a magnetic pump comprises a shell (part of which is referenced 342m on figure 20D) containing a hydraulic part, or impeller, coupled to a shaft which bears an inner magnetic ring; outside the shell, an outer magnetic ring is mounted on a drive shaft and is magnetically coupled to the inner magnetic ring through the shell. A motor can drive the drive shaft and the outer magnetic ring in rotation; in turn, the outer magnetic ring drives the inner magnetic ring, and the impeller, in rotation because of the magnetic coupling. In case of a magnetic pump, the axis 345 of figure 20B is the drive shaft, the impeller and its shaft being housed in the housing 332.

The ink circuit of a CIJ printer (for example the CIJ printer of figure 29) can have a receiving portion or zone or interface to receive the pump module and connect it to the hydraulic circuit of the printer. Said receiving portion or zone or interface has at least one fluid inlet (s) which corresponds to the fluid outlet 336 and at least one fluid outlet which corresponds to the fluid inlet 334 of said pump single-block assembly, so that fluid can flow from said interface outlet into said first single-block assembly and then out of said first single-block assembly to said interface inlet.

Figures 20B- 20D show an embodiment of a pump module (or ink pressure pump module) 350, in which the motor 327 of the pump 342 is located outside the pump module. The hydraulic part 342h of the pump is maintained between front cover 333 and a back cover 333' which can be demountable as can be seen on figure 20D. The hydraulic part 342h of the pump can be easily removed after back cover 333' is demounted. Reference 342m is for example the outer magnetic part of the pump, it is located outside of the housing 332.

As seen on figure 20C the back side of the housing of the pump module is not completely closed so that the pump 342 (or the part of the pump contained in the housing 332) can be cooled by air of the surrounding atmosphere.

The housing can be provided with slots or openings 360 to facilitate air circulation around the pump.

The ink circuit has a receiving portion or zone or interface to receive the module, which can be mounted on and disassembled from said receiving portion or zone or interface, for example with one or more screw(s), or nut(s), or bolt(s), or clip(s), or clamp(s) or hook(s) or any other securing means. Hole $332h_1$, $332h_2$, $332h_3$ are visible on figure 20D to accommodate screws $332s_1$, $332s_2$, $332s_3$, one screw head $332s'_3$ being visible on figure 20C.

As can be understood from figure 20D, a fluid connector 300, illustrated on figures 20A, can be used to connect the inlet/outlet 343/340 of the pump of figure 20B to the inlet/outlet 334/336 of the housing.

The pump module 350 can be used in a continuous ink jet printer, for example as illustrated on figure 29.

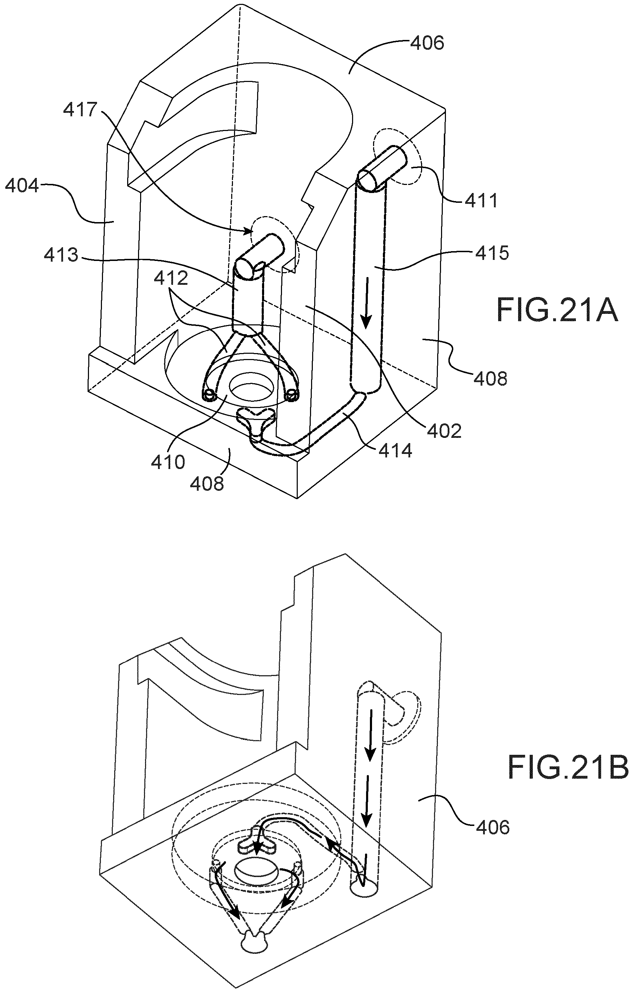

Another example of a fluid component according to the invention is a stimulation body 400 and is illustrated on figures 21A-21B.

This stimulation body can be used in combination with a piezoelectric component or actuator to generate ink drops or jets.

It comprises 2 lateral walls 402, 404, a back wall 406 and a bottom wall 408.

The bottom wall comprises a recess 410 to receive a piezoelectric component or actuator (not represented on the figure).

The stimulation body of this example comprises several ducts 412, 413, 414, 415 in which a fluid can circulate from a fluid supply network to a stimulation chamber 421 and from said stimulation chamber back to said fluid supply network. The fluid flow is represented by arrows on figures 21A and 21B. Ducts 412, 414 are in the bottom wall 408 or can protrude from said wall.

The outside surface of the back wall 406 forms a fluid connection surface comprising 2 holes 411, 417 through which the fluid can flow and which can be connected to a fluid manifold, for example of the type disclosed above in connection with figures 18-19B.

The stimulation body 400 can be used in an ink drop generating unit 228 of a printing head 800 as disclosed in connection with figures 18-19B.

The stimulation body 400, including its conduits or ducts, can have one or more of the features already described above in connection with other embodiments. In particular:

- the inlet 411 and/or the outlet 417 is/are preferably smooth enough so that it can be applied and pressed against another fluid component, for example the top surface of drop generator and electrodes support 226 or the upper surface 221 of support 220 (see figures 18-19B) to form a leak-tight assembly (possibly with help of sealing means, for example one or more gasket(s)); this means that these areas preferably have a roughness less than 10 $\mu$m or even less than 5 $\mu$m;
- and/or the inner surface(s) of at least part of the ducts 412, 413, 414, 415 has a roughness less than 10 $\mu$m or less than 5 $\mu$m, more preferably between 3 and 1,5 $\mu$m. Thus, pigments of ink cannot remain attached to said inner surface(s), where they could form residual solid growth on the ink flow.

If a desired roughness is not obtained by the 3D printing process (see below), a further smoothing step (mechanical and/or chemical) can be implemented as explained below.

One or more of the ducts 412, 413, 414, 415 may be straight while one or more of said ducts of this manifold can have curved segments or sections, as shown on figure 21A, thus avoiding sharp angles and the above-mentioned problems. Such curved segments or sections have a non-zero (and finite) radius of curvature, for example at least 0.5 mm, in the plane of the network which allows a flow of liquid without pressure loss due to sharp angles. Preferably none of said ducts has sharp angles. Curved segments or sections contribute to a compact device, with less pressure losses and no possibility for ink or ink pigments to form residual solid growth on the ink flow.

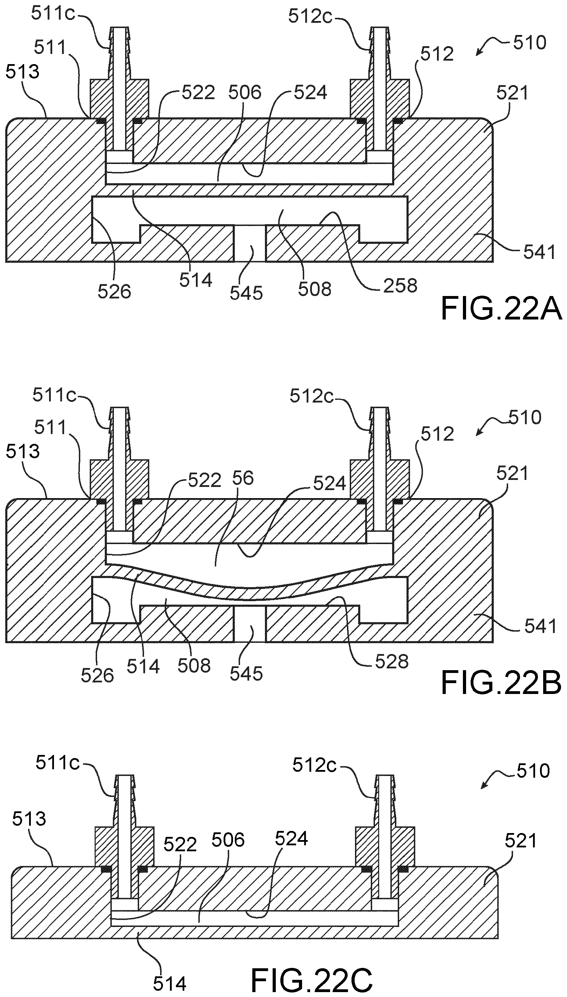

Another example of a fluid component according to the invention is a damper 500 and various embodiments thereof are illustrated on figures 22A-27.

Figures 22A and 22B are sections of a first embodiment of a damper 510 according to the invention.

It comprises a chamber 506, delimited by a 1$^{st}$ lateral wall 522 and an upper wall 524, and further comprising a fluid inlet 511 and a fluid outlet 512 in a surface 513 forming a fluid connection area. Fluid connectors 511c and 513c are positioned against said fluid connection area 513 and in corresponding ducts. At least part of said fluid connection area and/or of one or both duct(s) can have the roughness of a component according to the invention (this applies as well to the other embodiments of a damper described below):

- the fluid connection area preferably has a roughness less than 10 $\mu$m or even less than 5 $\mu$m;
- and/or the inner surface of at least part of at least one of the ducts has a roughness less than 10 $\mu$m or less than 5 $\mu$m, more preferably between 3 and 1,5 $\mu$m. Thus, pigments of ink cannot remain attached to the inner surface of the conduct, where they could form residual solid growth on the ink flow.Said chamber 506 has an inner diameter defined by the lateral wall 522. A first or upper portion 521 forms a cap or cover, the internal walls of which form the lateral wall 522 and the upper wall 524; in the rest of this description, this part of the device can also be designated as the "first portion 521". At least part of the walls delimiting said chamber can have the roughness (Ra) mentioned above for the duct(s), which applies as well to the other embodiments of a damper described below.

It can further comprise a second chamber 508, delimited by a 2$^{nd}$ lateral wall 526 and a bottom wall 528; said second chamber 508 can be filled with air (or any other gas) or communicates with the atmosphere outside the damper, for example through one or more holes 545 in a second or lower portion forming a cap or cover 541; in the rest of this description, this part of the device can also be designated as the "second portion 541".

A damping element comprises a flexible membrane 514; its dimensions, in particular the surface of the membrane in contact with the fluid in chamber 506, are calculated according to the pressures variations which must be damped in a CIJ printer. The membrane can have variable different aspects and/or thicknesses. Its thickness is for example between 0,5 mm and 2 mm or 3 mm. According to one example, the membrane is flat.

The membrane is formed by additive printing with the rest of the damper; it separates both chambers 506, 508.

A damper according to the invention is preferably rotational symmetrical, around an axis XX' which is substantially perpendicular to the membrane when it is at rest. In particular, said fluid receiving chamber and/or its upper portion 521, and/or the membrane and/or said second chamber and/or its lower portion 541, is/are preferably rotational symmetrical around said axis XX'.

Since the damper is manufactured by additive printing, there is no seal member inside the damper to ensure sealing between the different portions and between the fluid receiving portion 506 and the outside of the damper.

Figure 22B shows that, under the influence of a pressure variation, for example of several bars, in the first fluid receiving portion 506, the membrane 524 of the device presented on figure 22A is deformed in the second chamber 508, where it does not come into contact with the bottom wall 528. The deformation of the membrane 524 is preferably linear and elastic, based on a bending moment, the restoring force being given by the bending moment (to the difference with respect to EP2484527, where the restoring force results from the tensile force).

A variant of the structure of figure 22A, illustrated on figure 22C, is similar to figure 22A but does not comprise the second portion 541. The membrane 514 and the first portion 521 form the chamber 506. The advantage of the second chamber 508 of figures 22A and 22B is that it protects the membrane and also the outside atmosphere, should the membrane explode or be torn.

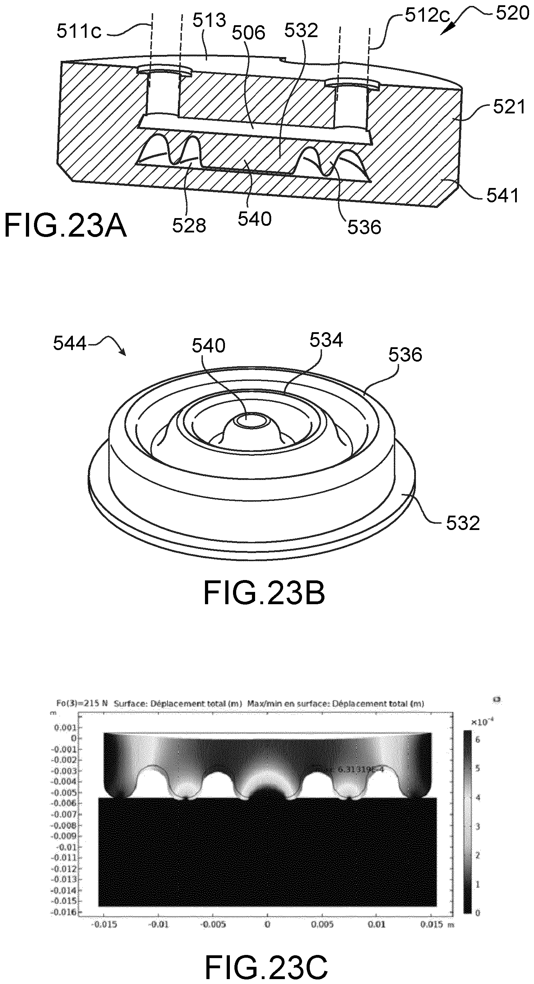

Figures 23A is a section of a second embodiment of a damper 520 according to the invention, figure 23B showing a damping element of this second embodiment.

The damper 520 has the same general structure as the first embodiment.

It comprises a damping element 544, which comprises a flat portion or membrane 532; its thickness is for example between 2mm and 5 mm or 10 mm. Thicknesses lower than 2 mm to shape the back surface are usually not compatible with pressures of up to 3 or 4 bars, which are usual in the field of continuous ink jet printers.

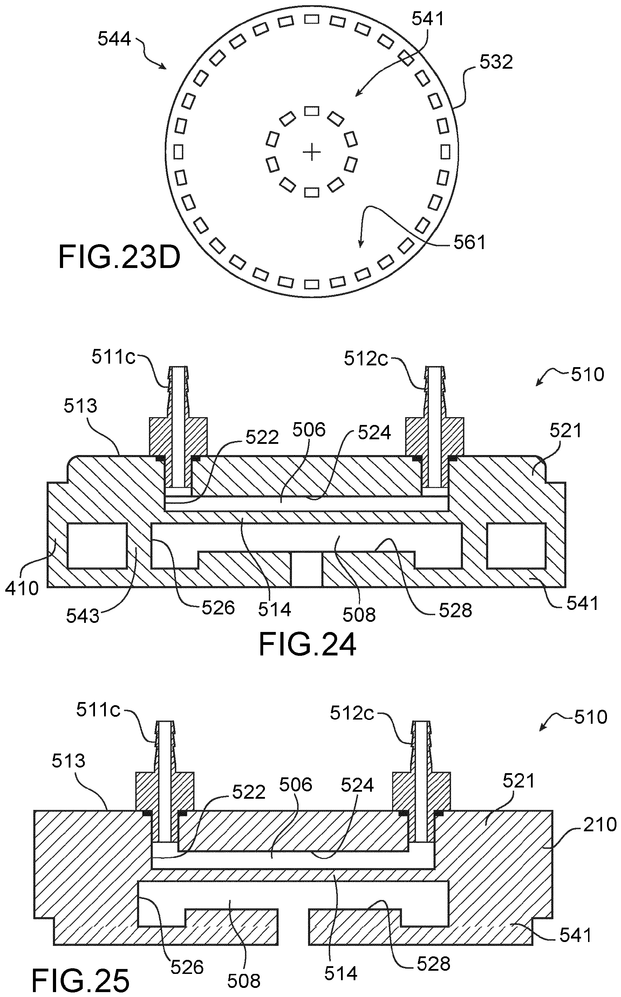

The damping element 544 further comprises damping rings or damping studs 536, 538, 540 which protrude from said flat portion or membrane 532 and which can bear on the lower surface 528 thereby damping the pressure variations without impairing the flexibility of the membrane. They are disposed along circles centered on the center of the membrane 532. On figures 23A and 23B, 2 rings and a central stud are represented, but other embodiments may comprise only 2 rings 534, 536 or 1 ring (for example ring 536) and one central stud 540; alternatively, one or more ring(s) can be replaced by a series of studs aligned according to a circle; this variant is shown on figure 23D which is a view from above the surface of the damper comprising the damping studs: it comprises 2 series 561, 541 of studs, each series being disposed along a circle centered on the center of the membrane 532.

The damping member(s) 544 forms a sealed separation being the fluid receiving portion 506 and the second chamber 528.

Like in the previous embodiment, there is no need for any seal between fluid receiving portion 506 and the second chamber 508 and between fluid receiving portion 506 and the outside of the damper. The seal is formed by the membrane itself.

Figure 23C shows that a pressure variation, for example of several bars, in the first fluid receiving chamber 506, deforms the damping membrane 544 of the device presented on figures 23A and 23B, as well as the damping rings or damping studs 536, 538, 540 which bear on the lower surface 528, thus ensuring a damping effect of the pressure variation. A same or similar effect is obtained for a damping member 544 according to figure 23D.

A damper according to the invention does not need any clamping or fastening means.

In another embodiment, illustrated on figures 24 and 25, one the two parts 521, 541 is larger than the other one, both parts being manufactured in a same 3D printing process.

On figure 24, the second portion 504 has a lateral wall 410 which extends outside the first portion 521. The second portion can further comprise a circular crown 543, which delimits chamber 508 and which supports the lateral side of the membrane 514. This embodiment can also be implemented with a damping element as disclosed in connection with figures 23A-23D (the second portion not comprising an internal circular crown 543).

Alternatively, as illustrated on figure 25, the first portion 521 has a lateral wall 210 which extends outside the second portion 504. This embodiment can also be implemented with a damping element as disclosed in connection with figures 23A-23D.

A damper according to the invention has a damping factor of up to 10 % or even 1%: for example, a pressure variation of 3 bars can be damped down to 0.3 bar or even 0.03 bar. The fluid receiving chamber of a damper according to the invention can have a small height (distance between the upper surface of the membrane 514 and the upper wall 524), for example between 1 mm and 5 mm, resulting in a fluid receiving portion 506 having a low volume, for example between 50 mm$^3$ and 10$^4$ mm$^3$. The efficiency of the damper is not affected by such a small volume, the damping efficiency resulting from the surface of the membrane in contact with the fluid receiving portion, not from the volume of the fluid receiving portion. But the fluid receiving portion can be optimized to minimize the fluid pressure drop (the so-called hydraulic resistance). A volume of, for example, between 50 mm$^3$ and 10$^4$ mm$^3$ allows this optimization because the flow cross-section between inlet 510 and outlet 512 is still important and therefore the flow of the fluid, and the hydraulic resistance can be small enough.

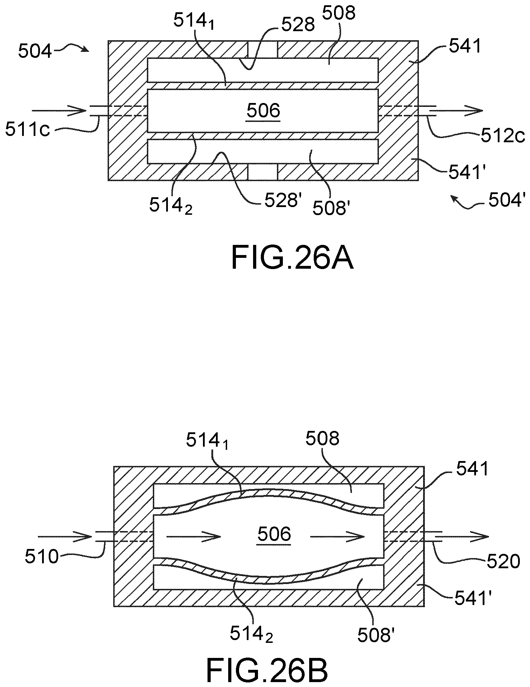

Alternatively, a further variant of a damper according to the invention is illustrated on figure 26A and comprises two circular flat membranes 514$_1$, 514$_2$ (or flexible plates) parallel to each other, thus delimiting a fluid receiving portion or chamber 506. The damper is provided with a fluid inlet 510 and a fluid outlet 520. Each membrane 514$_1$, 514$_2$:

- has a diameter for example between 10 mm or 20 mm and 40 mm or 50 mm;
- and/or a thickness for example between 0,5 mm and 2 mm or 3 mm.

The fluid receiving portion 506 has:

- a small height (distance between the two membranes at rest), for example between 1 mm and 5 mm;
- and/or a low volume, for example between 50 mm$^3$ and 10$^4$ mm$^3$.

Each membrane 514$_1$, 514$_2$ separates the receiving portion 506 from a second chamber 508, 508', delimited by a cover portion 541, 541' similar or identical to cover portion 541 already described above in connection with figures 22A or 22B.

A variant of the structure of figure 26A does not comprise the cover portions 541, 541'. The fluid receiving chamber is closed by the membranes 514$_1$, 514$_2$ and the device can work without second chambers 508, 508'. The advantage of each second chamber 508, 508' of figure 26A is that it protects the membranes and also the outside atmosphere, should one of the membranes explode or be torn.

Due to the 3D manufacturing process, the different parts of the device do not need to be assembled and clamped or fastened together with any.

Figure 26B shows that each damping membrane 514$_1$, 514$_2$ of the device presented on figure 26A is deformed under a pressure variation, for example of several bars, in the fluid receiving chamber 506; this deformation ensures a damping effect of the pressure variation.

Alternatively, this embodiment can be implemented with damping elements as disclosed in connection with figures 23A-23D, each comprising damping rings or damping studs 536, 538, 540 which can bear on the surfaces 528, 528' and are for damping the pressure variations. It forms a separation being the fluid receiving portion 506 and one of the second chambers 508, 508'. The diameter and/or thickness of each membrane can be those already mentioned above in connection with figures 22A-25.

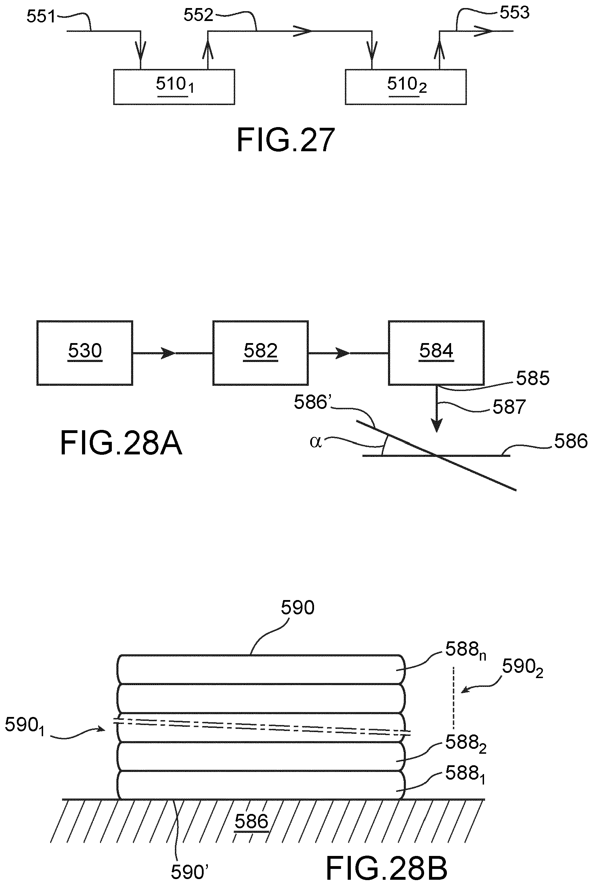

The damping effect can be reinforced by implementing two dampers $510_1$, $510_2$ in series, each according to the invention, as illustrated on figure 27, the fluid circulating through the first damper $510_1$ and then through the second damper $510_2$ (both dampers being connected through a duct 525) before flowing to the print head. Each damper $510_1$, $510_2$ can be a damper according to any embodiment of the invention. References 551 and 552 designate the inlet ducts into the first damper and the second damper and reference 553 is the outlet duct out of said second damper.

Any embodiment of a damper according to the invention can be implemented in an ink circuit of a CIJ printer comprising a gear pump to pump the ink; this kind of pump has pressure variations in a range of 2 to 5 bars or 3 to 4 bars; alternatively a diaphragm pump can be implemented, having pressure variations in a range of 100 mbars to 500 mbars. Both pressure variations can be efficiently dampened by a damper according to the invention, the pressure variations being damped down to a factor comprised between 1% and 10% of the above-mentioned ranges.

A damper according to the invention and as described above, for a continuous ink jet printer, comprises a fluid receiving chamber 506, which comprises at least a lateral wall 522, a fluid inlet 511c and a fluid outlet 512c, and at least one membrane 514, $514_1$, $514_2$, 532, 540 said membrane being deformed under the influence of a pressure variation.

In a particular embodiment, it can comprise a second chamber 508, 508', 528 said membrane being comprised between said fluid receiving chamber and said second chamber.

As explained above, both sides of the membrane can be flat or can have a complex shape with a variable thickness. Alternatively, if the damper comprises a second chamber, the side of said membrane turned towards said second chamber can further comprise damping means 534, 536, 541, 561 protruding from said membrane.

A damper according the invention can be cylindrical, extending along an axis XX'.

In particular embodiments, a damper according the invention can comprise:

- a second membrane $514_2$, said lateral wall and said fluid receiving chamber 506 being disposed between the two membranes.
- or an upper wall 524, said fluid receiving chamber 506 being disposed between said upper wall and said membrane.

A fluid circuit of a continuous ink jet printer can comprise a first conduit, 551 a second conduit 552 and at least one damper according to the invention, said first conduit being connected to said fluid inlet and said second conduit being connected to said fluid outlet of said at least one damper. Said fluid circuit can comprise a sec-

ond damper $510_2$, for example also according to the invention, said second conduit being connected to a fluid inlet of said second damper, a third conduit 553 being connected to a fluid outlet of said second damper.

A fluid circuit of a continuous ink jet printer can further comprise a reservoir and a pump, for example a gear pump or a diaphragm pump, connected to an inlet of said first conduit, said second conduit being connected to a printing head.

A method for damping pressure variations, for example of between 2 bar and 5 bar in a fluid circuit of a continuous ink single jet printer, can comprise circulating said fluid in at least one damper according to the invention, said pressure variations deforming said at least one membrane which thus damps said pressure variations.

A damper according to the invention is adapted to a continuous inkjet (CIJ) printer comprising a single-nozzle or a multi-nozzle ink jet print head, as represented on figures 1 and 17 of EP 17186002.

A damper according to the invention is connected between an inlet conduit and an outlet conduit of a fluid circuit of a CIJ printer, for example of a circuit connecting a reservoir and the printing head. Said circuit further comprises a pump for pumping fluid from the reservoir. Pressure variations of this fluid are damped by the damper according to the invention.

The damper according to one of the above embodiments can be implemented in a continuous ink jet printer as illustrated on figure 29, for example at the outlet of pump 694 for pumping solvent.

It can for example be connected to chamber 72 of the device illustrated on figure 4B. It can be manufactured together with said device during a same 3D printing process.

The fluid connection area(s) of any component or device or part according to the invention, which area(s) is/are for receiving a fluidic device or component, for example a valve, can have either counterbores, in which sealing means, for example one or more gasket(s), can be positioned. This area preferably has a roughness Ra which is preferably less than 10 $\mu$m or less than 5 $\mu$m or 3$\mu$m, more preferably less than 2$\mu$m, for example 1,6 $\mu$m, so that sealing means can be pressed against said surface and efficiently seal an assembly of a device according to the invention and another fluidic device or component.

As already explained above, the inner or inside surface of one or more duct(s) of any component or device or part according to the invention can also have a desired roughness, for example less than 10 $\mu$m or less than 5 $\mu$m or 3$\mu$m, more preferably less than 2$\mu$m, for example 1,6 $\mu$m.

As explained below, the roughness of any fluid connection area(s) and/or of any inside surface of the ducts of any component or device according to the invention can be obtained by selecting and preparing an appropriate material and a manufacturing process of the component or the device.

Any component or device or part according to the invention is preferably made by a 3D printing technology, for example one of the following technologies: extrusion, Material Jetting, Photo-polymerization and Powder bed fusion. These technologies are for example described in the article by N. Shahrubudina et al.: "An Overview on 3D Printing Technology: Technological, Materials, Applications", 2nd International Conference on Sustainable Materials Processing and Manufacturing (SMPM 2019), Procedia Manufacturing 35 (2019) 1286-1296.

Powder bed fusion is currently the preferred solution because it is adapted to industrial needs.

Several other technologies can also be implemented in the frame of the present invention: SLS (Selective Laser Sintering), SHS (Selective Heat Sintering) and EBM (Electron Beam Melting) as described in the above cited publication or other technologies such as DMLS (Direct Metal Laser Sintering), which is similar to SLM (Selective Laser Melting). Hybrid technologies are also available; they combine powder bed fusion and binder jetting such as powder bed selective heat absorbing assisted by 2D printing technology.

3D printing technology makes use of data of a Computer Aided Design model of the component to be manufactured, which generates a file 580 (figure 28A) of a 3D model of the component, or an already existing data file 580 of a 3D model of said component is already available. Said data of said file 580 are read by a computer 582 which is adapted to control a 3D printer 584 accordingly.

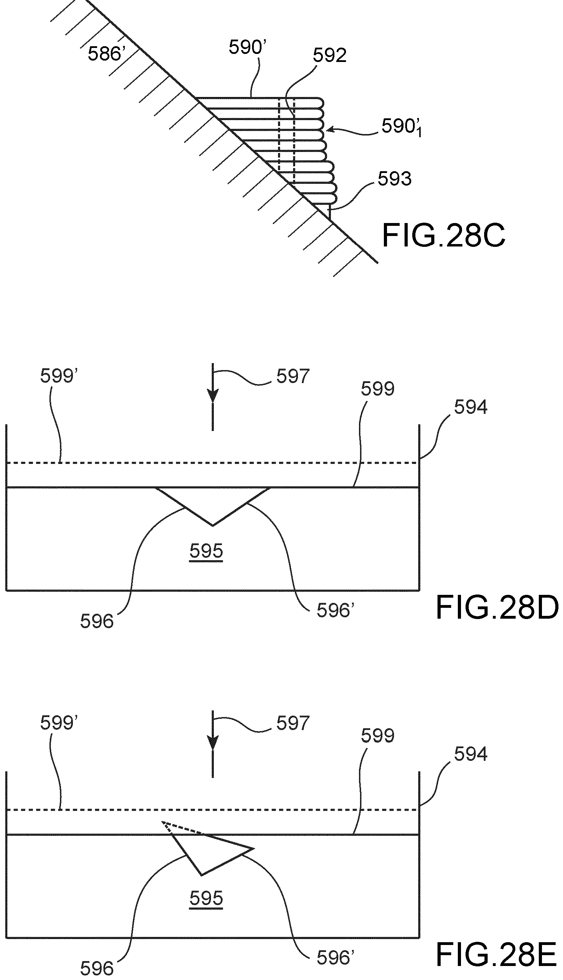

Under control of computer 582, the selected material is deposited layer by layer $588_1$ - $588_n$ (figure 28B, n being any integer number), by said 3D printer 584 on a support 586 through one or more nozzles 585 of the 3D printer. Each layer $588_1$, $588_2$, ..;$588_n$ has for example a thickness of between 5 $\mu$m or 20$\mu$m and 300 $\mu$m or 500 $\mu$m, compatible to achieve the required roughness; alternatively, said 3D printing process can be supplemented with an additional step of smoothing at least one fluid connection area and/or at least part of the inner surfaces of one or more duct(s). The 3D printing process of figures 28A-28C is performed on a substrate 586 which can be more or less inclined with respect to the flow 587 of material: on figure 28A, the substrate 286 is horizontal but it can be inclined to another position 586' which makes an angle $\alpha$ (for example: $0° < \alpha < 45°$) with respect to the horizontal position, although printing is still performed "horizontally", as can be understood from figure 28C, on which the deposited layers rest on a support 593.

In both cases one of the surfaces, for example the top surface 590 (in, particular with the extrusion process) or the bottom surface 590' of a succession of layers $588_1$ - $588_n$ or $588'_1$ - $588'_n$ deposited by 3D printing has a much better (smaller) roughness than the other surfaces of sides, for example a better roughness than the lateral sides $590_1$, $590_2$, $590'_1$ of the stack of layers. Depending on the quality (and in particular of the roughness Ra) of the upper surface of substrate 286, the best roughness Ra can be obtained at bottom surface 590' which is directly in contact with said upper surface.

Therefore, printing is performed taking into account the area or surface of the component which must have a better roughness than the other parts. This can be for example area 40 of component 20 (figure 2A) or area 28 of component 50 (figure 4A) or area 110 or 210 of the component of figures 5A-14B or the area 513 of component 520 of figure 23A, each of these areas or surfaces forming a fluid connection area of a device according to the invention; such area is preferably smooth enough so that sealing means, for example a gasket, can be applied against it and efficiently seal the area where it is located. Said area preferably has a roughness less than 10$\mu$m or less than 5 $\mu$m or less than 3 $\mu$m, for example 1,6 $\mu$m.

Another example of 3D printing process is illustrated on figures 28D and 28E: it implements a build tank 594 is which the material 595, for example powder, from which the component must be manufactured is collected, layer by layer. A laser beam 597 is directed to the surface 599 of the bed 595 to generate fusion of the material on said surface and in the deposited layer immediately under said surface: this technique can in particular be implemented if the material is a metal. Alternatively, a binder is projected onto said surface to assemble the particles: this technique can in particular be implemented for a plastic material.

When the material of the surface 599 and in its directly underlying layer is transformed, either by the laser or by the binder, another layer of material is added onto the bed 595, the material of said other layer being also processed. The component is manufactured in an order which depends on the ability of the selected printing technique to generate a desired roughness on a specific surface or area. For example, the process illustrated on figure 28D may be able to generate a surface of said component having a specific orientation, for example surface 596', which has a required roughness: in this case, the component is manufactured so that surface 596' has the orientation shown on figure 28D. Depending on the printing conditions, the surface 596' can have a better roughness when the final component is oriented as illustrated on figure 28E. As illustrated on these figures 28D and 28E, any of these orientations may not be horizontal. Which orientation should be selected for a specific area in order for it to have the required roughness Ra can be tested by trial and error.

If the roughness of an area of a component obtained by 3D printing is too high, it can be further processed after 3D printing; for example, it can be machined or smoothed or grinded, or polished; alternatively, or in addition, it can also be chemically processed (in particular for plastic materials), for example in a bath of abrasive or corrosive fluid, for example a liquid comprising corundum or diamond particles or an acid (HCl).

In some cases, after the 3D printing process, one area, for example the top surface 590 or the bottom surface 590' has the desired roughness but the roughness of another area remains too high; in that case, one or more other area(s) than area 590, 590' can be further processed, they are for example machined or smoothed or grinded, or polished. This can be the case for a component like the one illustrated on figures 4A and 4B: this component can be 3D printed so that a major fluid connection area 68 - against which several solenoid valves can be connected - is the surface of the stack of layers which has the best roughness, for example the bottom of layer 590' of figure 28A; if surface 70 of the component must also have a desired roughness but the conditions are not as favourable for this surface as for surface 68, its roughness just after 3D printing may be too high: in this case, surface 70 can be further processed according to one of the above methods.

As explained below, a manifold according to the invention is preferably made of metal, for example stainless steel or ceramic or plastic. Depending on the material, an adapted 3D printing method can be selected, for example from the above list of methods. For powder bed 3D printing, the material is a powder which is deposited and/or heated during the 3D printing process.

The design of the component is also taken into account, in order to take advantages of the abilities offered by the selected 3D printing technique. In particular, fluid connections should be optimized in order to ease the obtaining of the appropriate roughness, through the number of connections in a fluid connection areas and its position. This way, appropriate roughness should be obtained directly during additive manufacturing; or the component should be placed or have an orientation such that it can be smoothed during post-processing.

The duct(s) and the fluid connection area(s) of a component or part according to the invention, or of a component or part of a CIJ printer according to the invention, are preferably made by the same 3D printing or additive manufacturing process. But said whole component or part, for example any mechanical link between two ducts, is also made by said process.

Roughness can be measured by a roughness measuring system or roughness meter (implementing for example a mechanical stylus or an optical type method). Roughness can be defined by Ra, the arithmetic average of the surface profile z(x), along a straight line of length $L_r$:

$$Ra = \frac{1}{L_r} \int_0^{Lr} |z(x)| dx$$

More information about the definition of the roughness Ra and about possible measuring techniques can be found in chapter 2 ("Surface Roughness Analysis and Measurement Techniques", by Bharat Bhushan, The Ohio State University) of the Modern Tribology Handbook, two volume set, first edition, 2000, CRC press, eBook ISBN 9780429126727.

The roughness obtained by any 3D printing process is between 1/30 and ½ of the average diameter of the grain of the powder used for 3D printing.

Using metal powder which grains had different diameters, the inventors have obtained the following results with a powder bed fusion process and layers having a thickness between 10 μm and 50 μm:

- with an average grain diameter of between 5 μm and 15 μm, a surface of a 3D printed component having a roughness Ra = 10 μm was obtained;
- with an average grain diameter of between 15 μm and 63 μm, a surface of a 3D printed component having a roughness Ra: 18 μm <Ra<23 μm.

It is clear that a stricter selection of the average grain diameter, or selection of appropriate surface, for example lower layer in contact on a glass substrate, would give better results and a roughness meeting the requirements of the present invention.

The same holds for other materials than metal. For example, using a plastic powder having an average grain diameter of 50 μm, a layer of 80 μm thickness was deposited by 3D printing; the roughness Ra of the all surfaces was 18 μm <Ra<23 μm, before any further polishing step.

It is therefore possible to adapt the selected powder, and in particular the size of the grains, according to the desired roughness, in particular in order to obtain the roughness of a fluid connection area and/or of the inner surface of a duct according to the invention.

The density of the powder may also play a role: a dense powder being more favourable to obtain a smaller roughness, in particular in the case of metal powder for example with powder bed fusion metal technique; it is therefore recommended to densify the powder before 3D printing.

One or more duct(s) 592 (figure 28C) can also be made during 3D printing: indeed, as can be understood from the above description, a component according to the invention can have one or more ducts in which one or more fluid, for example ink and/or a solvent adapted for a CIJ printer can circulate..

One or more duct(s) of a component according to the invention can be for circulating ink, which comprises solvent but also pigments and binders. The inside walls, along which the fluid circulates and which are in contact with ink and/or solvent, are preferably as smooth as possible, their roughness being preferably less than 10 μm, or less than 5 μm, more preferably between 3 and 1,5 μm. Thus, pigments of ink cannot remain attached to the inner surface of the conduct, where they could form residual solid growth on the ink flow.

The desired or required roughness can be achieved by 3D printing. A further step can be performed after 3D printing if the roughness obtained by 3D printing is too large; for example, smoothing of the ducts can be achieved by circulating an abrasive or corrosive fluid in the device after 3D printing, for example a liquid comprising corundum or diamond particles or an acid (HCl).

Alternatively, if both a fluid connection area and the inside of a duct of a same component must be further processed, the component can be dipped into a bath of an abrasive or corrosive fluid in the device after 3D printing.

The material to manufacture any device or component according to the invention offers chemical resistance to ink/solvent, defined as the stability of the device after at least 1, 2 or 3 weeks soaking (or immersion) in at least one organic solvent, for example at least one solvent suitable for CIJ printing (for example at least MEK, and/or C5 ketone - pentanone -, such as MIPK -Methyl Isopropyl Ketone- and/or MPK -Methyl Propyl Ketone-, and/or Ethanol), or in an ink based on any of said solvents, at a temperature of at least 40°C or 45 °C, this stability determined by a variation of weight and/or of at least one dimension of less than 5%, preferably less than 3%, more preferably less than 1%.

Examples of material offering such resistance are plastic materials, like "Nylon" (PA11, or PA12), polyamides, PEEK, PPS (polyphenylene sulphide), stainless steel. But other materials, for example metals, can be implemented; or ceramics In addition to having chemical resistance, the selected material preferably offers mechanical robustness, and is preferably fire-retardant.

Several components can be formed with a minimum amount of material, as for example illustrated in connection with figures 1-2C.

Such a component - also called topologically optimized component - has a very light weight, a low cost and can fulfill the same functions as the original component while minimizing material consumption. It can include one or more mechanical reinforcing element(s) for example at least one wall 41 (figures 2A, 2B) or at least one beam so that the component remains robust and mechanically strong. End parts, comprising the fluid connection surface(s), also contribute to the strength of the component.

In such a topologically optimized component, the walls of the ducts have for example a thickness of between 1 mm and 10 mm, or between 3 mm and 5 mm, which saves all the material which is normally between the ducts. The thickness of the wall of the ducts is preferably selected based on the material and the required rigidity of the component, in particular with respect to the fluid pressure (for example up to 10 bars).

One or more fluid component(s) according to the invention is adapted to a continuous inkjet (CIJ) printer comprising a single-nozzle or a multi-nozzle ink jet print head, as represented for example on figures 1 and 17 of EP 17186002 and described in this same document.

Alternatively, one or more fluid component(s) according to the invention can be incorporated in a CIJ inkjet as illustrated on figure 29.

As illustrated on this figure, this printer comprises an ink cartridge receiving portion 682a to receive an ink cartridge 682 and a solvent cartridge receiving portion 684a to receive a solvent (or organic solvent) cartridge 684 (both cartridges can be removed from the circuit) and an ink supply system comprising an ink circuit, which can include a main reservoir 680. The receiving portions allow a circulation or a flow of fluid (ink and/or solvent) from each cartridge(s) to said ink circuit, comprising fluid conduits or ducts. Thus, ink can be supplied to a print head 800.

In the example illustrated on figure 29, said ink circuit can comprise a module 50 (or manifold) and several ducts to connect the receiving portions 682a and 684a to the circuit, comprising the main reservoir 680 and different modules 350, 730, 750.

An example of module 50 was already described above (see figures 4A-4C): it can comprise an ink portion, comprising said ink cartridge receiving portion, and a solvent portion comprising said solvent cartridge receiving portion, the ink portion being for a connection to an ink pump 692 for pumping the ink from an ink cartridge 682 and the solvent portion being for a connection to a pump 694 for pumping the solvent from a solvent cartridge 684. The outlet of the solvent pump 694 (on line 147) can be provided with a damper 510, to damp the oscillations of the solvent resulting from the pump 694; said damper is for example as described above in connection with figures 22A-27.

Module 50 can also comprise a number of 3-way valves $693_1$, $693_2$, $693_3$, 699 to send the appropriate fluid to the ink circuit, for example to the appropriate module 350, 730, 750 and/or to the reservoir 680.

Examples of modules 730, 750 are described below, an example of module 350 was already described above (see figure 20B).

Ducts 696-698 can connect the ink portion and the solvent portion of the hydraulic module 50 with main reservoir 680; ducts 702-704 can connect the ink portion and the solvent portion of the hydraulic module 50 with the different modules 350-750 as shown on figure 29.

Each of the modules 350, 730, 750 can be maintained in the circuit by appropriate fastening or securing means, for example one or more screw(s), or nut(s), or bolt(s), or clip(s), or clamp(s) or hook(s) or any other securing or fastening means so that each module can be mounted on the circuit and dismounted or removed from said circuit.

The main reservoir 680 can be for example of the type comprising two compartments as disclosed in EP 3466697, the upper compartment $680_1$ for storing ink and the lower compartment $680_2$ for storing solvent:

- the upper part $680_1$ can be supplied with ink from cartridge 682 through one or more of said valves $693_1$, $693_2$, $693_3$, and one or more of said ducts 696; Ink can be pumped from this upper part by the pump of module 350 through one or more ducts 710;
- the lower part $680_2$ can be supplied with solvent from cartridge 684 through one or more of said valves 699 and one or more of said ducts 697; solvent can be pumped from this lower part by the pump 694 through one or more ducts 698.

In an example, filter module 730 comprises a housing 732, possibly including a cover 733; said module comprises one or more fluid inlet(s) 736, 742, and one or more fluid outlet(s) 738, 744; inside the module or its housing, one or two filter(s) 734 (a so-called "grid filter"), resp. 740 (a so-called "main ink filter") is/are connected to a corresponding set of fluid inlet 736 and fluid outlet 738.

Another filter 746 (in this example: a filtering grid) can be connected between main filter outlet 747 and the fluid outlet 744.

The ink circuit can have a receiving portion or zone or interface to receive the filter module and connect it to the hydraulic circuit of the printer. Said receiving portion or zone or interface has at least two fluid inlets which correspond to the fluid outlets 738 and 744 and at least two fluid outlets which correspond to the fluid inlets 736 and 742 of said filter module, so that fluid can flow from said interface outlet(s) into said filter module and then out of said filter module to said interface inlet(s). The filter module can be mounted in or on the ink circuit or on said receiving portion or zone or interface; it can be demounted from said circuit or from said receiving portion or zone or interface of the ink circuit. For example, one or more screw(s), or nut(s), or bolt(s), or clip(s), or clamp(s) or hook(s) or any other securing or fastening means can be used to mount and remove said filter module.

Recovery module 750 can comprise a housing 752, possibly including a cover 753; said module comprises one or more fluid inlet(s) 755, 759, 761, and one or more fluid outlet(s) 757, 763; inside the housing, a recovery device, for example a venturi or a diaphragm pump 754, is for recovering from the printing head ink not used for printing, the recovery device outlet being connected to one of the fluid outlets 757, 763; a filter 756 can be connected between the fluid inlet 755 and the recovery device in order to filter said ink recovered from the printing head; at least one 3-way valve 766 can also be connected between the filter 756 and the pump 754 in order to select a fluid from inlet 755 (usually ink returning from the print head) or inlet 759 (usually solvent or air).

The ink circuit can have a receiving portion or zone or interface 751 to receive the recovery module and connect it to the hydraulic circuit of the printer. The recovery module can be mounted in or on the ink circuit or on said receiving portion or zone or interface; it can be demounted from said circuit or from said receiving portion or zone or interface of the ink circuit. For example, one or more screw(s), or nut(s), or bolt(s), or clip(s), or clamp(s) or hook(s) or any other securing means can be used to mount and remove said module.

Said receiving portion or zone or interface has at least two fluid outlets which correspond to the fluid inlets 755, 761, 759 and at least two fluid inlets which correspond to the fluid outlet 757, 763, so that fluid can flow from said interface outlets into said module 750 and then out of said module 750 to said interface inlets.

As can be seen on figure 29, a damper 774 can be connected on the fluid path to the inlet 736 of the filter module 730 (between fluid outlet 716 of module 350 and fluid inlet 736 of module 730), in order to damp the pressures variations or oscillations of the ink before sending it to the print head, such pressures variations or oscillations being generated by the pump and degrading the print quality. The fluid then flows through filter 734 and is then sent to the print head through part of the fluid circuit (for example through a fluid manifold as illustrated on figure 29 by arrows 801 and 803), and in particular through the filter 740.

A 3-way valve 776 can be connected to the outlet 744 of the filter module 730. Depending on the operation stage of the printer, the fluid flowing out of the filter module 730 can be sent, through the valve 776, either to the print head 800 (possibly through an additional filter 777) or to the main reservoir of the circuit (through the recovery module 750). A sensor 775 can be implemented to measure the pressure and/or the temperature of the fluid flowing out of the filter module 730. The combination of valve 776 and sensor 775 is represented in connection to module 20, an embodiment of which being illustrated on figures 2A-2C and 2E.

A 3-way valve 100 can be connected to the inlet 334 of the pump module 350. Depending on the operation stage of the printer, the fluid flowing into the pump module 350 can be from the reservoir 680 or from the printer manifold. The valve 100 (described above in connection with any of figures 5A-13B) is represented in a body or manifold 150, an embodiment of which being illustrated on figures 16A-16D.

Damper 774 is represented in a module 731 which can also be made by additive printing according to the invention, the damper being positioned against the fluid connection area of this module after 3D printing.

Each of the modules 350, 730, 750 can also be made by additive printing according to the invention:

- the pump 324h of module 350 being positioned against the fluid connection area of this module after 3D printing;
- and/or the filters 734, 740, 746 of module 730 being positioned against one or more fluid connection area(s) of this module after 3D printing;
- and/or the filter 756, the pump 754 and the valve 786 of module 750 being positioned against one or more the fluid connection area(s) of this module after 3D printing.

A CIJ printer, for example the one illustrated on figure 29, is used in combination with a print head 800, which can be according to one of the embodiments of figures 18-19B.

A CIJ printer can comprise one or more of the above-described fluid components according to the invention which offer(s) many advantages as already explained above.

## Claims

1. A fluid component (20, 100, 220, 300, 400, 500) for a continuous inkjet printer, comprising:

   at least two ducts (22, 24, 26, 28, 30, 52, 54, 56), each duct having an inner surface and each duct extending between a first end and a second end, the at least two ducts being configured for circulation of a fluid comprising an organic solvent, at least one fluid inlet and at least one fluid outlet, and
   at least one fluid connection area (38, 40, 42, 68, 70) comprising at least one of said at least one fluid inlet and at least one fluid outlet, **characterised in that** said fluid component being a one-piece fluid component made of a material chemically resistant to the organic solvent, and **in that** at least part of said fluid connection area has a roughness (Ra) of less than 5 $\mu$m and at least part of the inner surface of at least one duct has a roughness (Ra) of less than 10 $\mu$m.

2. A fluid component according to claim 1, wherein the fluid component is a fluid manifold, and/or part of a printing head, or a hydraulic distributor, or a fluid damper or a fluid connector or comprises at least one chamber for a sensor and/or a damping chamber.

3. A fluid component according to any of claims 1 or 2, comprising at least two fluid connection areas extending in different planes.

4. A fluid component according to any of claims 1 to 3, said material being chemically resistant to ethanol and/or methyl isopropyl ketone (MIPK) and/or methyl ethyl ketone (MEK).

5. A fluid component according to any of claims 1 to 4, wherein at least one of said ducts comprises a curved shape with a finite, non-zero radius of curvature in at least one plane comprising at least a tangent to a flow direction of the fluid in said at least one duct.

6. A fluid component according to any of claims 1 to 5, comprising a succession of layers ($588_1$ - $588_n$, $588'_1$ - $588'_n$) in said chemically resistant material, each layer having a thickness of between 5 $\mu$m and 300 $\mu$m.

7. A fluid component according to any of claims 1 to 6, said chemically resistant material comprising stainless steel, or a ceramic material, or a plastic material or a glass material.

8. A fluid component according to any of claims 1 to 7, said at least 2 ducts:

   - extending along non-parallel directions and/or intersecting with each other;
   - and/or extending in a same plane or different planes;
   - and/or being coupled together with a mechanical link (14).

9. A fluid component according to any of claims 1 to 8, at least part of at least one duct having a wall with a thickness between 1 mm and 10 mm.

10. A fluid component according to any of claims 1 to 9, wherein said first fluid component is assembled with a second fluid component connected with said fluid connection area of the first fluid component, wherein said second fluid component comprises at least one of a valve, a pump, a filter, a damper, a fluid connector or a hydraulic distributor, said second fluid component comprising at least one fluid inlet and at least one fluid outlet which matches with said at least one of said fluid inlet and said fluid outlet of the first fluid component, so that at least one fluid can circulate from said first fluid component to said second fluid component and/or vice versa.

11. A continuous inkjet (CIJ) printer, comprising:

    - an ink supply system comprising an ink circuit,
    - a portion (682a) for receiving an ink cartridge and a portion (684a) for receiving a solvent cartridge;
    - at least one fluid component according to any of claims 1 to 10.

12. A continuous inkjet (CIJ) printer according to claim 11, further comprising a print head (800) connected to the ink circuit via a flexible umbilical cable (2), said cable containing hydraulic connection means to bring ink from the ink circuit to the print head (800) and send ink to be recovered from the print head (800) towards said ink circuit, and electrical connection means.

13. A process for manufacturing a fluid component according to any of claims 1 to 10, the fluid component is for a continuous inkjet printer from a material which is chemically resistant to at least one organic solvent, comprising the forming of at least two duct(s) for circulating at least one of an ink and a solvent, each duct having at least one fluid inlet and at least one fluid outlet, and the forming of at least one fluid connection area comprising at least one of said at least one fluid inlet and at least one fluid outlet, **characterised in that** the fluid component is additively manufactured by depositing successive layers of said chemically resistant material, each having a thickness of between 5 μm and 300 μm, so that at least part of said at least one fluid connection area has a roughness (Ra) of less than 5 μm and at least part of an inner surface of at least one duct has a roughness (Ra) of less than 10 μm.

14. A process according to claim 13, said process further comprising smoothing the inner surface of at least part of at least one duct and/or of said at least one fluid connection area.

15. A process according to any of claims 13 or 14, comprising forming at least one fir-tree connection onto at least one end of one or more duct(s) or further comprising machining at least one end of one or more duct(s) to form one or more fir-tree connection(s).

**Patentansprüche**

1. Fluidkomponente (20, 100, 220, 300, 400, 500) für einen kontinuierlichen Tintenstrahldrucker, umfassend:

   mindestens zwei Kanäle (22, 24, 26, 28, 30, 52, 54, 56), wobei jeder Kanal eine Innenoberfläche aufweist und sich jeder Kanal zwischen einem ersten Ende und einem zweiten Ende erstreckt, wobei die mindestens zwei Kanäle zur Zirkulation eines Fluids konfiguriert sind, das ein organisches Lösungsmittel umfasst,
   mindestens einen Fluideinlass und mindestens einen Fluidauslass, und
   mindestens einen Fluidverbindungsbereich (38, 40, 42, 68, 70), der mindestens einen von dem mindestens einen Fluideinlass und mindestens einen Fluidauslass umfasst,
   **dadurch gekennzeichnet, dass** die Fluidkomponente eine Fluidkomponente aus einem Stück ist, die aus einem gegenüber dem organischen Lösungsmittel chemisch beständigen Material hergestellt ist, und dadurch, dass mindestens ein Teil des Fluidverbindungsbereichs eine Rauheit (Ra) von weniger als 5 μm aufweist und mindestens ein Teil der Innenoberfläche von mindestens einem Kanal eine Rauheit (Ra) von weniger als 10 μm aufweist.

2. Fluidkomponente nach Anspruch 1, wobei die Fluidkomponente ein Fluidverteiler ist und/oder Teil eines Druckkopfes oder eines Hydraulikverteilers oder eines Fluiddämpfers oder eines Fluidverbinders ist oder mindestens eine Kammer für einen Sensor und/oder eine Dämpfungskammer umfasst.

3. Fluidkomponente nach einem der Ansprüche 1 oder 2, die mindestens zwei Fluidverbindungsbereiche umfasst, die sich in unterschiedlichen Ebenen erstrecken.

4. Fluidkomponente nach einem der Ansprüche 1 bis 3, wobei das Material chemisch beständig gegen Ethanol und/oder Methylisopropylketon (MIPK) und/oder Methylethylketon (MEK) ist.

5. Fluidkomponente nach einem der Ansprüche 1 bis 4, wobei mindestens einer der Kanäle eine gekrümmte Form mit einem endlichen, von Null unterschiedlichen Krümmungsradius in mindestens einer Ebene aufweist, die mindestens eine Tangente zu einer Strömungsrichtung des Fluids in dem mindestens einen Kanal umfasst.

6. Fluidkomponente nach einem der Ansprüche 1 bis 5, die eine Abfolge von Schichten ($588_1$ - $588_n$, $588'_1$ - $588'_n$) in dem chemisch beständigen Material umfasst, wobei jede Schicht eine Dicke zwischen 5 μm und 300 μm aufweist.

7. Fluidkomponente nach einem der Ansprüche 1 bis 6, wobei das chemisch beständige Material rostfreien Stahl oder ein Keramikmaterial oder ein Kunststoffmaterial oder ein Glasmaterial umfasst.

8. Fluidkomponente nach einem der Ansprüche 1 bis 7, wobei die mindestens 2 Kanäle:

   - sich entlang nicht paralleler Richtungen erstrecken und/oder sich gegenseitig überschneiden;
   - und/oder sich in einer gleichen Ebene oder unterschiedlichen Ebenen erstrecken;
   - und/oder mit einer mechanischen Verbindung (14) zusammengekoppelt sind.

9. Fluidkomponente nach einem der Ansprüche 1 bis 8, wobei mindestens ein Teil von mindestens einem Kanal eine Wand mit einer Dicke zwischen 1 mm und 10 mm aufweist.

10. Fluidkomponente nach einem der Ansprüche 1 bis 9, wobei die erste Fluidkomponente mit einer zweiten Fluidkomponente zusammengesetzt ist, die mit dem Fluidverbindungsbereich der ersten Fluidkomponente verbunden ist, wobei die zweite Fluidkomponente mindestens eines von einem Ventil, einer Pumpe, einem Filter, einem Dämpfer, einem Fluidverbinder oder einem Hydraulikverteiler umfasst, wobei die zweite Fluidkomponente mindestens einen Fluideinlass und mindestens einen Fluidauslass umfasst, der mit dem mindestens einen Fluideinlass und dem Fluidauslass der ersten Fluidkomponente übereinstimmt, sodass mindestens ein Fluid von der ersten Fluidkomponente zur zweiten Fluidkomponente und/oder umgekehrt zirkulieren kann.

11. Kontinuierlicher Tintenstrahl-, (CIJ)-Drucker, umfassend:

    - ein Tintenzufuhrsystem, das einen Tintenkreislauf umfasst,
    - einen Abschnitt (682a) zum Aufnehmen einer Tintenpatrone und einen Abschnitt (684a) zum Aufnehmen einer Lösungsmittelpatrone;
    - mindestens eine Fluidkomponente nach einem der Ansprüche 1 bis 10.

12. Kontinuierlicher Tintenstrahl-, (CIJ)-Drucker nach Anspruch 11, weiter umfassend einen Druckkopf (800), der über ein flexibles Versorgungskabel (2) mit dem Tintenkreislauf verbunden ist, wobei das Kabel hydraulische Verbindungsmittel enthält, um Tinte vom Tintenkreislauf zum Druckkopf (800) zu bringen, und vom Druckkopf (800) zurückzugewinnende Tinte zum Tintenkreislauf zu senden, und elektrische Verbindungsmittel.

13. Prozess zur Herstellung einer Fluidkomponente nach einem der Ansprüche 1 bis 10, wobei die Fluidkomponente für einen kontinuierlichen Tintenstrahldrucker aus einem Material ist, das gegen mindestens ein organisches Lösungsmittel chemisch beständig ist, umfassend das Bilden von mindestens zwei Kanälen zur Zirkulation von mindestens einem von einer Tinte und einem Lösungsmittel, wobei jeder Kanal mindestens einen Fluideinlass und mindestens einen Fluidauslass aufweist, und das Bilden von mindestens einem Fluidverbindungsbereich, der mindestens einen der mindestens einen von dem mindestens einen Fluideinlass und mindestens einen Fluidauslass umfasst, **dadurch gekennzeichnet, dass** die Fluidkomponente additiv durch Abscheiden aufeinanderfolgender Schichten aus dem chemisch beständigen Material gefertigt wird, die jeweils eine Dicke zwischen 5 $\mu$m und 300 $\mu$m aufweisen, sodass mindestens ein Teil des mindestens einen Fluidverbindungsbereichs eine Rauheit (Ra) von weniger als 5 $\mu$m aufweist und mindestens ein Teil einer Innenoberfläche von mindestens einem Kanal eine Rauheit (Ra) von weniger als 10 $\mu$m aufweist.

14. Prozess nach Anspruch 13, wobei der Prozess weiter Glätten der Innenoberfläche von mindestens einem Teil von mindestens einem Kanal und/oder des mindestens einen Fluidverbindungsbereichs umfasst.

15. Prozess nach einem der Ansprüche 13 oder 14, umfassend Bilden von mindestens einer Dorn-Verbindung an mindestens einem Ende eines oder mehrerer Kanäle oder weiter umfassend das Bearbeiten von mindestens einem Ende eines oder mehrerer Kanäle, um eine oder mehrere Dorn-Verbindungen zu bilden.

**Revendications**

1. Composant fluide (20, 100, 220, 300, 400, 500) pour une imprimante à jet d'encre continu, comprenant :

    au moins deux conduits (22, 24, 26, 28, 30, 52, 54, 56), chaque conduit présentant une surface intérieure et chaque conduit s'étendant entre une première extrémité et une seconde extrémité, les au moins deux conduits étant configurés pour la circulation d'un fluide comprenant un solvant organique,
    au moins une entrée de fluide et au moins une sortie de fluide, et
    au moins une zone de connexion de fluide (38, 40, 42, 68, 70) comprenant au moins une desdites au moins une entrée de fluide et au moins une sortie de fluide,
    **caractérisé en ce que** ledit composant fluide est un composant fluide monobloc constitué d'un matériau chimiquement résistant au solvant organique, et **en ce qu'**au moins une partie de ladite zone de connexion de fluide présente une rugosité (Ra) inférieure à 5 $\mu$m et au moins une partie de la surface intérieure d'au moins un conduit présente une rugosité (Ra) inférieure à 10 $\mu$m.

2. Composant fluide selon la revendication 1, dans lequel le composant fluide est un collecteur de fluide, et/ou une partie d'une tête d'impression, ou d'un distributeur hydraulique, ou d'un amortisseur de fluide ou d'un connecteur de fluide ou comprend au moins une chambre pour un capteur et/ou une chambre d'amortissement.

3. Composant fluide selon l'une quelconque des revendications 1 ou 2, comprenant au moins deux zones de connexion de fluide s'étendant dans des plans différents.

4. Composant fluide selon l'une quelconque des revendications 1 à 3, ledit matériau étant chimiquement résistant à l'éthanol et/ou à la méthylisopropylcétone (MIPK) et/ou à la méthyléthylcétone (MEK).

5. Composant fluide selon l'une quelconque des revendications 1 à 4, dans lequel au moins l'un desdits conduits comprend une forme incurvée avec un rayon de courbure fini, non nul, dans au moins un plan comprenant au moins une tangente à une direction d'écoulement du fluide dans ledit au moins un conduit.

6. Composant fluide selon l'une quelconque des revendications 1 à 5, comprenant une succession de couches ($588_1$ - $588_n$, $588'_1$ - $588'_n$) dans ledit matériau chimiquement résistant, chaque couche présentant une épaisseur comprise entre 5 $\mu$m et 300 $\mu$m.

7. Composant fluide selon l'une quelconque des revendications 1 à 6, ledit matériau chimiquement résistant comprenant de l'acier inoxydable ou un matériau céramique ou un matériau plastique ou un matériau en verre.

8. Composant fluide selon l'une quelconque des revendications 1 à 7, lesdits au moins 2 conduits :

   - s'étendent le long de directions non parallèles et/ou se croisent les uns avec les autres ;
   - et/ou s'étendent dans un même plan ou dans des plans différents ;
   - et/ou sont couplés ensemble par une liaison mécanique (14).

9. Composant fluide selon l'une quelconque des revendications 1 à 8, au moins une partie d'au moins un conduit présentant une paroi d'une épaisseur comprise entre 1 mm et 10 mm.

10. Composant fluide selon l'une quelconque des revendications 1 à 9, dans lequel ledit premier composant fluide est assemblé avec un second composant fluide relié à ladite zone de connexion de fluide du premier composant fluide, dans lequel ledit second composant fluide comprend au moins l'un parmi une soupape, une pompe, un filtre, un amortisseur, un connecteur de fluide ou un distributeur hydraulique, ledit second composant fluide comprenant au moins une entrée de fluide et au moins une sortie de fluide qui correspond à ladite au moins une desdites entrée de fluide et sortie de fluide du premier composant fluide, de sorte qu'au moins un fluide puisse circuler dudit premier composant fluide vers ledit second composant fluide et/ou vice versa.

11. Imprimante à jet d'encre continu (CIJ), comprenant :

   - un système d'alimentation en encre comprenant un circuit d'encre,
   - une partie (682a) destinée à recevoir une cartouche d'encre et une partie (684a) destinée à recevoir une cartouche de solvant ;
   - au moins un composant fluide selon l'une quelconque des revendications 1 à 10.

12. Imprimante à jet d'encre continu (CIJ) selon la revendication 11, comprenant en outre une tête d'impression (800) reliée au circuit d'encre par l'intermédiaire d'un câble ombilical flexible (2), ledit câble contenant des moyens de liaison hydraulique pour amener de l'encre du circuit d'encre à la tête d'impression (800) et envoyer de l'encre à récupérer de la tête d'impression (800) vers ledit circuit d'encre, et des moyens de liaison électrique.

13. Processus de fabrication d'un composant fluide selon l'une quelconque des revendications 1 à 10, le composant fluide étant destiné à une imprimante à jet d'encre continu à partir d'un matériau chimiquement résistant à au moins un solvant organique, comprenant la formation d'au moins deux conduits pour faire circuler au moins l'un parmi une encre et un solvant, chaque conduit présentant au moins une entrée de fluide et au moins une sortie de fluide, et la formation d'au moins une zone de connexion de fluide comprenant au moins l'une desdites au moins une entrée de fluide et au moins une sortie de fluide, **caractérisé en ce que** le composant fluide est fabriqué de manière additive par dépôt de couches successives dudit matériau chimiquement résistant, chacune présentant une épaisseur comprise entre 5 $\mu$m et 300 $\mu$m, de sorte qu'au moins une partie de ladite au moins une zone de connexion de fluide présente une rugosité (Ra) inférieure à 5 $\mu$m et qu'au moins une partie d'une surface intérieure d'au moins un conduit présente une rugosité (Ra) inférieure à 10 $\mu$m.

14. Processus selon la revendication 13, ledit processus comprenant en outre le lissage de la surface intérieure d'au moins une partie d'au moins un conduit et/ou de ladite au moins une zone de connexion de fluide.

15. Processus selon l'une quelconque des revendications 13 ou 14, comprenant la formation d'au moins une connexion en sapin sur au moins une extrémité d'un ou de plusieurs conduits ou comprenant en outre l'usinage d'au moins une extrémité d'un ou de plusieurs conduits pour former une ou plusieurs connexions en sapin.

EP 4 337 468 B1

FIG.1

FIG.2A

28

FIG.2B

FIG.2C

FIG.2D

43

43'

33  29  31

20

25

27

402a

35

42

775

401c

NC

402b

401b

776

401a

37

41

29'

39

FIG.3

FIG.4A

FIG.4B

FIG.4C

FIG.5A

FIG.5B

FIG.5C

FIG.5D

FIG.5E

FIG.6A

FIG.6B

FIG.7A

FIG.7B

FIG.8

FIG.9A

FIG.9B

**FIG.10A**

**FIG.10B**

**FIG.11A**

**FIG.11B**

**FIG.12A**

**FIG.12B**

FIG.13A

FIG.13B

FIG.14A

FIG.14B

FIG.14C

FIG.15A

FIG.15B

FIG.15C

FIG.16A

FIG.16B

FIG.16C

FIG.16D

FIG.17

FIG.18

FIG.19A

FIG.19B

FIG.20A

FIG.20B

FIG.20C

FIG.20D

FIG.21A

FIG.21B

FIG.22A

FIG.22B

FIG.22C

FIG.23A

FIG.23B

FIG.23C

FIG.23D

FIG.24

FIG.25

FIG.26A

FIG.26B

FIG.27

FIG.28A

FIG.28B

586' 590' 592

590'₁

593

**FIG.28C**

599' 597 599 594

595

596 596'

**FIG.28D**

599' 597 599 594

595

596 596'

**FIG.28E**

FIG.29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015187839 A
- EP 17186002 A
- EP 2484527 A
- EP 3466697 A

**Non-patent literature cited in the description**

- **N. SHAHRUBUDINA et al.** An Overview on 3D Printing Technology: Technological, Materials, Applications. *2nd International Conference on Sustainable Materials Processing and Manufacturing (SMPM 2019), Procedia Manufacturing*, 2019, vol. 35, 1286-1296
- **BHARAT BHUSHAN**. Surface Roughness Analysis and Measurement Techniques. The Ohio State University
- Modern Tribology Handbook. CRC press, 2000